# EUROPEAN PATENT APPLICATION

(11) **EP 4 819 321 A1**
(43) Date of publication of application: **07.10.2026**
(21) Application number: 24897662.3
(22) Date of filing: 28.11.2024
(51) Int. Cl.: H01M 50/204, B29C 64/106, B32B 27/32, B33Y 80/00, B60K 1/04, H01M 50/24, H01M 50/222, H01M 50/227, H01M 50/229, H01M 50/231, H01M 50/233, H01M 50/271, H01M 50/278

(54) **BATTERY PACK, METHOD FOR MANUFACTURING BATTERY PACK, AND METHOD FOR MANUFACTURING RECYCLED MOLDED ARTICLE**

(30) Priority: 29.11.2023 JP 2023201881; 29.11.2023 JP 2023201880; 29.11.2023 JP 2023201882
(71) Applicant: Mitsubishi Chemical Corporation, Tokyo 100-8251 (JP)
(72) Inventor: HIRANO, Akiko, Tokyo 100-8251 (JP); TAKADA, Tsuyoshi, Tokyo 100-8251 (JP); KAGURA, Aki, Tokyo 100-8251 (JP)
(74) Representative: Vossius & Partner Patentanwälte Rechtsanwälte mbB
(86) International application number: PCT/JP2024/042221
(87) International publication number: WO 2025/115978

(57) **Abstract**

A battery pack including an upper case including an upper case main body and an upper flange protruding outward from an outer peripheral edge of the upper case main body along a horizontal plane, and being formed of a material including a synthetic resin; a lower case including a lower case main body and a lower flange protruding outward from an outer peripheral edge of the lower case main body along a horizontal plane, and being disposed to face the upper flange from below; and a power storage unit disposed in an accommodation section formed of the upper case main body and the lower case main body, in which the battery pack includes, between the upper flange and the lower flange, a thermoplastic elastomer layer formed of rubber alone and/or a composition including rubber and a thermoplastic resin. According to the present invention, a battery pack recyclable as a material can be provided.

## Description

### Technical Field

The present invention relates to a battery pack, a method for manufacturing the battery pack, and a method for manufacturing a recycled molded article.

### Background Art

In the related art, battery packs in which a power storage unit is disposed in a case have been known (for example, see Patent Literatures 1 and 2).

The case includes an upper case and a lower case.

The upper case includes an upper case main body formed in a topped cylindrical shape, and an upper flange protruding outward from an outer peripheral edge of a lower end portion of the upper case main body. The lower case includes a lower case main body formed in a bottomed cylindrical shape, and a lower flange protruding outward from an outer peripheral edge of an upper end portion of the lower case main body.

The upper flange of the upper case is disposed to face the lower flange of the lower case.

The power storage unit stores predetermined electric power. The power storage unit is disposed in the upper case main body and the lower case main body.

A sealing material is also used between the upper flange and the lower flange (for example, see Patent Literature 1).

The sealing material is used for the purpose of waterproofing and dustproofing, and vulcanized rubber is used as a member that is flexible and requires rubber elasticity.

In recent years, research and development of electric vehicles and hybrid vehicles have progressed as part of environmental measures, and development of high-energy density batteries and weight reduction are progressing actively with the aim of improving driving range. Since an unexpected accident may cause such a high-energy density battery to be ignited, and a case of the battery needs to have high flame blocking properties as a safety measure for passengers, a metallic material and a fireproofing material are often used in combination.

However, the metallic material has a disadvantage of increased weight and a problem of an increase in costs due to processability and the increased number of components when used in combination with the fireproofing material, as a result of which attempts have been made to use a resin capable of achieving both weight reduction and flame blocking properties (see for example, Patent Literature 3).

### Citation List

### Patent Literature

Patent Literature 1: WO 2014/109243
Patent Literature 2: JP 2020-40385 A
Patent Literature 3: WO 2022/220303

### Summary of Invention

### Technical Problem

At present, carbon dioxide reduction and recyclability have been regarded as important for a sustainable society, but vulcanized rubber typically used as a sealing material has the problem that material recycling is difficult.

The present invention has been made in view of the above problems, and an object of the present invention is to provide a battery pack recyclable as a material.

### Solution to Problem

In order to solve the above problems, the present invention (the first aspect) proposes the following means.
(1) An aspect 1-1 of the present invention is a battery pack including an upper case having an upper case main body and an upper flange protruding outward from an outer peripheral edge of the upper case main body along a horizontal plane, and being formed of a material including a synthetic resin; a lower case including a lower case main body and a lower flange protruding outward from an outer peripheral edge of the lower case main body along a horizontal plane, and being disposed to face the upper flange from below; and a power storage unit disposed in an accommodation section formed of the upper case main body and the lower case main body, in which the battery pack includes, between the upper flange and the lower flange, a thermoplastic elastomer layer formed of rubber alone and/or a composition including rubber and a thermoplastic resin.
(2) An aspect 1-2 of the present invention may be the battery pack according to (1), in which the thermoplastic elastomer layer is formed of a material including either or both of olefinic rubber and a polyolefin-based resin.
(3) An aspect 1-3 of the present invention may be the battery pack according to (1) or (2), in which the synthetic resin includes a thermoplastic resin.
(4) An aspect 1-4 of the present invention may be the battery pack according to any one of (1) to (3), in which the synthetic resin includes a polyolefin-based resin.
(5) An aspect 1-5 of the present invention may be the battery pack according to any one of (1) to (4), in which the upper case is formed of a resin fiber composite material obtained by mixing a fiber with a synthetic resin.
(6) An aspect 1-6 of the present invention may be the battery pack according to (5), in which the fiber includes a glass fiber.
(7) An aspect 1-7 of the present invention may be the battery pack according to (5) or (6), in which the resin fiber composite material is a stampable sheet.
(8) An aspect 1-8 of the present invention may be the battery pack according to any one of (1) to (7), in which the thermoplastic elastomer layer is in direct contact with at least one of the upper flange and the lower flange.
(9) An aspect 1-9 of the present invention may be the battery pack according to any one of (1) to (8), including a protrusion protruding upward from the upper flange.
(10) An aspect 1-10 of the present invention may be a method for manufacturing the battery pack described in any one of (1) to (9), in which the thermoplastic elastomer layer is thermally fused with at least one of the upper flange and the lower flange.
(11) An aspect 1-11 of the present invention may be a method for manufacturing the battery pack described in any one of (1) to (9), in which the thermoplastic elastomer layer is molded by a three dimensional additive manufacturing method.
(12) An aspect 1-12 of the present invention may be a method for manufacturing a recycled molded article, including: a recovery step of recovering an upper case and a thermoplastic elastomer layer from the battery pack described in any one of (1) to (9); a pulverization step of pulverizing a recovered material recovered in the recovery step; and a manufacturing step of manufacturing a recycled molded article including a pulverized product pulverized in the pulverization step as a raw material.

### Advantageous Effects of Invention

The battery pack of the present invention is recyclable as a material.

### Brief Description of Drawings

FIG. 1 is a cross-sectional view of a main part of an electric vehicle in which a battery pack according to an embodiment of the present invention is used, as viewed from a side.
FIG. 2 is a cross-sectional view of a main part of an electric vehicle in which a battery pack according to another embodiment of the present invention is used, as viewed from a side.
FIG. 3 is a top view of a lower case of the battery pack.
FIG. 4 is a diagram illustrating a shape of shaping data of a sample for measuring a thickness of a thermoplastic elastomer layer.
FIG. 5 is a view illustrating a portion where a thickness of a thermoplastic elastomer layer is measured.
FIG. 6 is a diagram illustrating a shape of shaping data of a sample for measuring a thickness of a thermoplastic elastomer layer.
FIG. 7 is a view illustrating the shaped appearance of the thermoplastic elastomer layer of Comparative Example 1.

### Description of Embodiments

### First Aspect of Present Invention

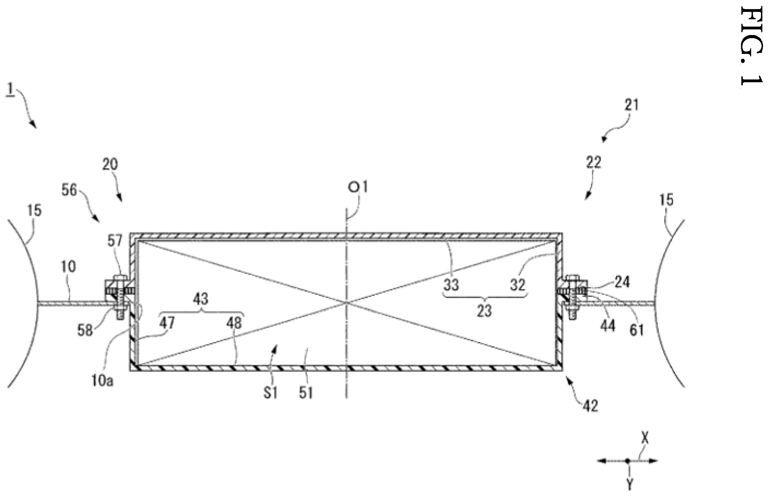

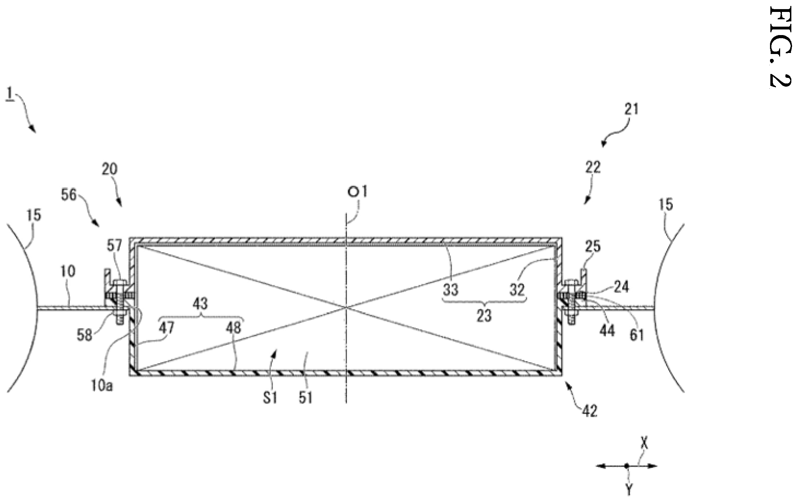

Hereinafter, an electric vehicle in which an embodiment of a battery pack according to a first aspect of the present invention is used will be described with reference to FIGS. 1 and 2.

As shown in FIG. 1, this electric vehicle 1 includes a chassis 10, tires 15, and the battery pack 20 of the present embodiment.

For example, the chassis 10 of the present embodiment constitutes a part of the framework of the electric vehicle 1. The chassis 10 extends along a horizontal plane. The phrase "A along B" means that an angle formed by the A and the B is 30 degrees or less. This angle formed is more preferably 15 degrees or less. For example, the A corresponds to the chassis 10, and the B corresponds to a horizontal plane.

The chassis 10 supports a motor (not shown).

An opening portion 10a penetrated in its vertical direction is formed in the chassis 10. A plurality of through holes (reference signs omitted) penetrated in the vertical direction are formed in a peripheral edge portion of the opening portion 10a in the chassis 10.

The battery pack 20 is supported by the chassis 10. The battery pack 20 stores electric power. The battery pack 20 supplies stored electric power to a motor based on an instruction of an operator of the electric vehicle 1. The battery pack 20 will be described in detail later.

The tire 15 is rotatably supported by the chassis 10 via a suspension (not shown). The motor rotates the tire 15 in a predetermined direction.

As shown in FIG. 1, the battery pack 20 includes a case 21, a power storage unit 51, and a fixing portion 56. The case 21 has an upper case 22 and a lower case 42.

The upper case 22 has an upper case main body 23 and an upper flange 24.

The upper case main body 23 is formed in a topped cylindrical shape. That is, the upper case main body 23 has an upper sidewall 32 and a top wall 33. Thus, a power storage unit 51 can be accommodated in a part of an accommodation space S1 formed in the upper sidewall 32.

The upper sidewall 32 is formed in a rectangular cylindrical shape (cylindrical shape) exhibiting a rectangular edge shape when viewed in its vertical direction. Hereinafter, a direction along one outer edge (short side) of the upper sidewall 32 when viewed in the vertical direction is referred to as a first direction X. The first direction X is a direction along a horizontal plane. Hereinafter, a direction orthogonal to the vertical direction and orthogonal to the first direction X is referred to as a second direction Y.

The shape of the upper sidewall 32 is not limited thereto and may be formed in a cylindrical shape or the like exhibiting a triangular or pentagonal edge shape or a polygonal edge shape having more than five angles, or a circular edge shape when viewed in the vertical direction.

The top wall 33 clogs an opening formed in an upper end portion of the upper sidewall 32. Hereinafter, the central axis of the top wall 33 is referred to as an axis O1. For example, the axis O1 is an axis that passes through the center of gravity of the top wall 33 and extends along the vertical direction.

The upper flange 24 protrudes from an outer peripheral edge of a lower end portion of the upper sidewall 32 of the upper case main body 23 toward an outside of the upper sidewall 32 along the horizontal plane. The term "outside" as used herein means a direction away from the axis O1.

The upper flange 24 protrudes over the entire circumference of the upper sidewall 32. Incidentally, the upper flange 24 may protrude only from a part of the upper sidewall 32 in the circumferential direction (a part around the axis O1).

The upper flange 24 has a plurality of through holes (reference signs omitted) penetrated in the vertical direction. The plurality of through holes are disposed with a space from each other around the upper sidewall 32.

As shown in FIG. 2, the battery pack 20 may have a flange protrusion 25. The battery pack 20 having the flange protrusion 25 as a protrusion, makes it possible to prevent a flame that goes around from an outside of the upper flange 24 and burns the end portion on an outside of the upper flange 24 from spreading beyond the flange protrusion 25 and spreading toward an inside of the upper flange 24.

The flange protrusion 25 protrudes upward from the upper flange 24. The flange protrusion 25 is disposed on an outer peripheral edge of the upper flange 24. The height of the flange protrusion 25 is approximately from 1 to 2 mm. The flange protrusion 25 has a rectangular outer peripheral edge shape when viewed from above.

The upper case main body 23, the upper flange 24, and the flange protrusion 25 of the upper case 22 are integrally formed of a material including a synthetic resin.

Examples of the resin to be used for the synthetic resin include a thermoplastic resin, a thermosetting resin, and an elastomer resin. Examples of the thermoplastic resin include polyolefin-based resins, such as a polypropylene resin, a polyethylene resin, a poly (1-) butene resin, and a polypentene resin, a polyester resin such as polyethylene terephthalate, a polystyrene resin, an acrylonitrile-butadiene-styrene (ABS) resin, a polyvinyl acetal resin, an ethylene-vinyl acetate copolymer (EVA) resin, a polyvinyl alcohol resin, a polycarbonate resin, a polyphenylene ether resin, an acrylic resin, a polyamide resin, a polyvinyl chloride resin (PVC), a novolac resin, a polyurethane resin, and a polyisobutylene resin. Examples of the thermosetting resin include an epoxy resin, a vinyl ester resin, a urethane resin, a phenol resin, a urea resin, a melamine resin, an unsaturated polyester resin, and a polyimide resin. Examples of the elastomer resin include acrylonitrile-butadiene rubber, ethylene-propylene-diene rubber (EPDM), ethylene-propylene rubber, natural rubber, polybutadiene rubber, polyisoprene rubber, a styrene-butadiene block copolymer, a hydrogenated styrene-butadiene block copolymer, a hydrogenated styrene-butadiene-styrene block copolymer, a hydrogenated styrene-isoprene block copolymer, and a hydrogenated styrene-isoprene-styrene block copolymer.

Among these, from the viewpoint of recyclability, it is preferred to include, as the synthetic resin, a thermoplastic resin, more preferred to include a polyolefin-based resin, and particularly preferred to include a polypropylene resin.

It is to be noted that in the first aspect of the present invention, the "polyolefin-based resin" means a resin in which the proportion of an olefin unit or a cycloolefin unit is 90 mol% or more, preferably 95 mol% or more, and still more preferably 98 mol% or more, relative to 100 mol% of all constituent units constituting the resin.

As a material including the synthetic resin for forming the upper case 22, for example, a resin composition obtained by imparting flame retardancy to the resin described above may be used, and a flame-retardant polypropylene resin may be used as the resin composition. For example, the resin composition disclosed in WO 2021/241682 can be preferably used. Specifically, the resin composition includes a thermoplastic resin, a phosphorus-based flame retardant, and a copolymer of an α-olefin and an unsaturated carboxylic acid. The proportion of the phosphorus-based flame retardant relative to the thermoplastic resin is 5 mass% or more and 400 mass% or less. The proportion of the copolymer relative to the phosphorus-based flame retardant is 10 mass% or less.

Also, the upper case 22 may be formed of a resin fiber composite material (fiber reinforced material) in which fibers are mixed with the synthetic resin, and for example, a resin composition in which fibers such as glass fibers or carbon fibers are contained in the synthetic resin may be used, or fibers such as glass fibers or carbon fibers may be impregnated with the synthetic resin. The fiber preferably includes a glass fiber. The resin-fiber composite material is preferably a stampable sheet, and a stampable sheet manufactured by impregnating a mat composed of fibers with the synthetic resin is more preferable, and for example, a stampable sheet disclosed in WO 2022/220303 can be preferably used. Specifically, the stampable sheet includes the thermoplastic resin, a flame retardant, a dispersant, and an inorganic fiber. The content of the inorganic fiber is from 1 to 80 mass% relative to the total weight. The content of the dispersant is more than 0 and 25 parts by mass or less relative to 100 parts by mass of the flame retardant.

A method for manufacturing the upper case 22, including various methods can be used, and press molding is preferable from the viewpoint of its productivity. During press molding, for example, it is preferable to fabricate a stampable sheet, a plurality of which are layered and press-molded.

As shown in FIG. 1, a lower case 42 has a lower case main body 43 and a lower flange 44.

The lower case main body 43 is formed in a bottomed cylindrical shape. That is, the lower case main body 43 has a lower sidewall 47 and a bottom wall 48.

Similarly to the upper sidewall 32, the lower sidewall 47 is formed in a rectangular cylindrical shape having a rectangular edge shape when viewed in the vertical direction. The bottom wall 48 clogs an opening formed in a lower end portion of the lower sidewall 47.

The lower flange 44 protrudes outward from an outer peripheral edge of the lower sidewall 47 of the lower case main body 43 along the horizontal plane. The lower flange 44 is disposed to face the upper flange 24 from below the upper flange 24. The phrase "A faces B" means that A and B face each other with a space therebetween.

The lower flange 44 has a plurality of through holes (reference signs omitted) penetrated in the vertical direction. The plurality of through holes are disposed with a space from each other around the lower sidewall 47.

The lower case 42 (including the lower case main body 43 and the lower flange 44) may be integrally formed of the same material as the material including the synthetic resin for forming the upper case 22, or may be formed of iron, aluminum, or the like.

A thermoplastic elastomer layer 61 is formed of rubber alone and/or a composition including rubber and a thermoplastic resin, and is formed between the upper flange 24 and the lower flange 44. That is, the thermoplastic elastomer layer 61 is provided between the upper flange 24 and the lower flange 44.

An adhesive layer or the like may be provided between the thermoplastic elastomer layer 61 and the upper flange 24 and between the thermoplastic elastomer layer 61 and the lower flange 44, but the thermoplastic elastomer layer 61 is preferably in direct contact with at least one of the upper flange 24 and the lower flange 44 from the viewpoint of waterproofing and dustproofing properties and the viewpoint of suppressing an increase in the number of components.

As described above, the material for forming the thermoplastic elastomer layer may be rubber alone or a composition including rubber and a thermoplastic resin, and is preferably a composition including rubber and a thermoplastic resin. Among these, from the viewpoint of recycling, a material including either or both of olefinic rubber and a polyolefin-based resin is preferable.

The thermoplastic elastomer layer formed of an elastomer including either or both of olefinic rubber and the polyolefin-based resin, which are excellent in recyclability, is melted and reformed by being reheated after use and can undergo material recycling into a new product such as a recycled molded article.

The olefinic rubber is preferably a copolymer including at least two or more α-olefin units. Examples of the α-olefin include ethylene, propylene, 1-butene, 2-methylpropylene, 1-pentene, 3-methyl-1-butene, 1-hexene, 4-methyl-1-pentene, and 1-octene. From the viewpoint of material recycling, it is preferable that ethylene having two carbon atoms and propylene having three carbon atoms are contained. Only one α-olefin may be copolymerized with ethylene, or two or more α-olefins may be copolymerized with ethylene. In addition, one type of olefinic rubber may be used alone or two or more types thereof may be used in combination.

The olefinic rubber may have another monomer unit such as a monomer unit based on a non-conjugated diene (non-conjugated diene unit) in addition to an ethylene unit and an α-olefin unit having from 3 to 8 carbon atoms. Examples of the non-conjugated diene include chain non-conjugated dienes such as 1, 4-hexadiene, 1,6-octadiene, 2-methyl-1,5-hexadiene, 6-methyl-1,5-heptadiene, and 7-methyl-1,6-octadiene; and cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, and 6-chloromethyl-5-isopropenyl-2-norbornene. Among these, 5-ethylidene-2-norbornene and dicyclopentadiene are preferable. Furthermore, an ethylene-propylene copolymer, an ethylene-propylene-diene copolymer, and an ethylene-butene copolymer may be partially or completely crosslinked. Among these, from the viewpoint of moldability and rubber elasticity, it is preferable that they are partially crosslinked.

A known polymerization method using a known catalyst for olefin polymerization may be used as the method for manufacturing the olefinic rubber. For example, a catalyst for olefin polymerization, which is a Ziegler-Natta-based catalyst, or complex-based catalysts such as a metallocene-based complex and a non-metallocene-based complex, can be used, and examples of the polymerization method include a slurry polymerization method, a solution polymerization method, a bulk polymerization method, and a gas phase polymerization method. In addition, commercially available products corresponding thereto may be used. Examples of the commercially available products corresponding thereto include Engage (trade name) series available from The Dow Chemical Company and TAFMER (trade name) series available from Mitsui Chemicals, Inc.

The polyolefin-based resin is preferably a crystalline polyolefin from the viewpoint of light weight, stable rubber elasticity, excellent mechanical properties, and favorable moldability.

The crystalline polyolefin may be an unmodified crystalline polyolefin or may be a modified crystalline polyolefin obtained by modifying a crystalline polyolefin with at least one functional group selected from the group consisting of an acid anhydride group, a carboxyl group, an amino group, an imino group, an alkoxysilyl group, a silanol group, a silyl ether group, a hydroxyl group, and an epoxy group.

Examples of the crystalline polyolefin include a propylene-based polymer and an ethylenic polymer. One of these compounds may be used alone or two or more thereof may be used in combination.

Examples of the propylene-based polymer include a propylene homopolymer, and a propylene-based copolymer which is a random or block copolymer of polypropylene with ethylene or an α-olefin such as 1-butene or 1-hexene.

The melt flow rate (JIS K 7210, 230°C, a load of 21.2 N) of the propylene-based polymer is not particularly limited, but is usually 0.05 to 200 g/10 minutes, preferably 0.05 to 100 g/10 minutes, and more preferably 0.1 to 80 g/10 minutes. The melt flow rate within the above-described range can achieve excellent moldability, favorable appearance of the thermoplastic elastomer layer to be obtained, and controlled mechanical properties within a desired range.

A commercially available product corresponding to the propylene-based polymer can also be used. Commercially available polypropylene is available from the following manufacturers and the like and can be appropriately selected.

Examples of the commercially available products include NOVATEC (trade name) PP from Japan Polypropylene Corporation, Prime Polypro (trade name) from Prime Polymer Co., Ltd., Sumitomo NOBLEN (trade name) from Sumitomo Chemical Co., Ltd., a polypropylene block copolymer from SunAllomer Ltd., Moplen (trade name) and Circluen from LyondellBasell Industries Inc., ExxonMobil PP from ExxonMobil Corporation, Formolene (trade name) from Formosa Plastics Corporation, Borealis PP from Borealis GmbH, SEETEC PP from LG Chem Ltd., ASI POLYPROPYLENE from A. Schulman, Inc., INEOS PP from INEOS Olefins & Polymers USA, LLC, Braskem PP from Braskem S. A., Sumsung Total from Samsung Total Petrochemicals Co., Ltd., Sabic (trade name) PP from SABIC (Saudi Basic Industries Corporation), TOTAL PETROCHEMICALS Polypropylene from Total Petrochemicals USA Inc., and YUPLENE (trade name) from SK Inc.

Examples of the ethylenic polymer include high-density polyethylene, low-density polyethylene, and linear low-density polyethylene.

The ethylenic polymer preferably has a density of 0.910 g/cm³ or more and 1.00 g/cm³ or less as measured in accordance with JIS K 7112 from the viewpoint of achieving both mechanical properties and rubber elasticity.

The melt flow rate (JIS K 7210, 190°C, a load of 21.2 N) of the ethylenic polymer is not particularly limited, but is usually 0.05 to 200 g/10 minutes, preferably 0.05 to 100 g/10 minutes, and more preferably 0.1 to 80 g /10 minutes. The melt flow rate within the above-described range can achieve excellent moldability, favorable appearance of the thermoplastic elastomer layer to be obtained, and controlled mechanical properties within a desired range.

The molecular weights of the propylene-based polymer and the ethylenic polymer are not particularly limited, but they preferably contain a resin having a weight-average molecular weight from 500 to 1500000 as measured by gel permeation chromatography (GPC). The weight-average molecular weight is more preferably 1000 to 1000000 and still more preferably 2000 to 500000.

It is to be noted that the weight-average molecular weight is determined using standard polystyrene as a molecular weight standard substance.

As described above, the thermoplastic elastomer layer is preferably formed of the material including either or both of olefinic rubber and the polyolefin-based resin, more preferably formed of a material including at least the polyolefin-based resin, and still more preferably formed of a composition including olefinic rubber and the polyolefin-based resin or a composition including a rubber component other than olefinic rubber and the polyolefin-based resin. When the thermoplastic elastomer layer is formed of a composition including the rubber component other than olefinic rubber and the polyolefin-based resin, a composition containing the polyolefin-based resin and styrene-based copolymer rubber as the rubber component other than olefinic rubber, is preferable.

The composition including the rubber and the thermoplastic resin may include a hydrocarbon-based softening agent for rubber from the viewpoint of improving the processability and flowability of the composition.

Examples of the hydrocarbon-based softening agent for rubber include a mineral oil-based softening agent and a synthetic resin-based softening agent with the mineral oil-based softening agent being particularly preferred. The mineral oil-based softening agent is generally a mixture of an aromatic hydrocarbon, a naphthenic hydrocarbon, and a paraffinic hydrocarbon, and a softening agent in which 50% or more of the total carbon atoms is a paraffinic hydrocarbon is referred to as a paraffinic oil, a softening agent in which from 30 to 45% of the total carbon atoms is a naphthenic hydrocarbon is referred to as a naphthenic oil, and a softening agent in which 35% or more of the total carbon atoms is an aromatic hydrocarbon is referred to as an aromatic oil. Among these, a paraffinic oil is preferable.

The kinematic viscosity of the hydrocarbon-based softening agent for rubber at 40°C is preferably 20 centistokes (cSt) or more and more preferably 50 cSt or more. The kinematic viscosity is, on the other hand, preferably 800 cSt or less and more preferably 600 cSt or less. The flash point (COC method) of the hydrocarbon-based softening agent for rubber is preferably 200°C or higher and more preferably 250°C or higher.

A commercially available product may be used as the hydrocarbon-based softening agent for rubber Examples of the commercially available products include "Nisseki Polybutene (trade name) HV" series available from ENEOS Corporation, "Diana (trade name) Process Oil PW" series available from Idemitsu Kosan Co., Ltd., and "VIVA-B-FIX" (trade name) series available from H&R Co., Ltd.

One hydrocarbon-based softening agent for rubber can be used alone or two or more thereof can be used in any combination and at any proportion.

A commercially available product can be used as the composition including olefinic rubber and a polyolefin-based resin. Examples thereof include Milastomer (trade name) available from Mitsui Chemicals, Inc., ESPOLEX (trade name) TPE Series available from SUMITOMO CHEMICAL CO., LTD., Thermolane (trade name) available from Mitsubishi Chemical Corporation, Trexprene (trade name) available from Mitsubishi Chemical Corporation, Tefabloc (trade name) TPO available from Mitsubishi Chemical Corporation, Santoprene (trade name) available from Celanese Corporation, Sarlink (trade name) available from TOYOBO MC Corporation, and DAWNPRENE (trade name) available from Shandong Dawn Polymer Co., Ltd.

A commercially available product can be used as the composition including styrenic copolymer rubber and a polyolefin-based resin. Examples thereof include Tefabloc (trade name) TPS available from Mitsubishi Chemical Corporation, Rheostmer (trade name) available from RIKEN TECHNOS CORPORATION, Elastomer AR (trade name) available from Aron Kasei Co., Ltd., Alostomer (trade name) available from Aron Kasei Co., Ltd., Ahneston (trade name) available from Kuraray Plastics Co., Ltd., and THERMOLAST (trade name) manufactured KRAIBURG TPE GMBH & CO. KG.

The thermoplastic elastomer layer 61 may be imparted with flame retardancy in order to suppress rupture at the time of thermal runaway. For example, as the material for forming the thermoplastic elastomer layer, a composition that contains rubber alone and/or a composition including rubber and a thermoplastic resin and that also contains a flame retardant may be used. A publicly known flame retardant may be used as the flame retardant.

The thermoplastic elastomer layer 61 may be imparted with conductivity in order to shield electromagnetic waves. For example, as the material for forming the thermoplastic elastomer layer, a composition that contains rubber alone and/or a composition including rubber and a thermoplastic resin and that also contains a conductive agent may be used, and the material for forming the thermoplastic elastomer layer and a composition including the conductive agent may be subjected to two-color molding. A publicly known conductive agent may be used as the conductive agent.

An optional method is used in order to manufacture the material forming the thermoplastic elastomer layer. Examples thereof include a method involving sufficient mixing using a preliminary mixing means such as a V-type blender, a Henschel mixer, a mechanochemical apparatus, or an extrusion mixer, optionally granulation by an extrusion granulator, a briquetting machine, or the like, and then melt-kneading by a melt-kneader, followed by extrusion. Examples of the melt-kneader include a twin-screw extruder such as a vent-type twin-screw extruder, a Banbury mixer, a kneading roll, a single-screw extruder, and a multi-screw extruder having three or more screws.

The thermoplastic elastomer layer 61 is obtained by molding the material for forming the thermoplastic elastomer layer. Examples of the molding method include extrusion processing, calendering, injection molding, rolling, compression molding, press molding, blow molding, and three dimensional additive manufacturing, and molding is preferably performed by the three dimensional additive manufacturing method.

The three dimensional additive manufacturing method is shaping by a 3D printer, and a printer of material extrusion method (MEX method) is preferably used as the 3D printer. The material for forming the thermoplastic elastomer layer can be supplied to the 3D printer in the shape of pellet, powder, granule, filament, or the like, and it is desirable to mold the material using a 3D printer of a type that can use a shaping material in the shape of pellet or granule. An example of such a printer includes a printer in which an extrusion nozzle is controllably driven by a gantry system, or by a robot arm system. A temperature during molding of the material forming the thermoplastic elastomer layer is, for example, from 170 to 260°C. In this case, the thermoplastic elastomer layer may be formed in one layer when layered by the 3D printer or may be layered in two or more layers.

The thermoplastic elastomer layer 61 may be obtained by molding the thermoplastic elastomer layer alone by three dimensional additive manufacturing or the like and then integrating the molded layer with a flange portion, but the thermoplastic elastomer layer 61 is preferably directly molded on the flange portion as described later.

The thermoplastic elastomer layer 61 is preferably thermally fused with at least one of the upper flange 24 and the lower flange 44. Adopting such a method has an advantage that no adhesive layer is required to be provided. In addition, adopting such a method also makes it possible to integrally mold a case formed of the material including the synthetic resin and the material forming the thermoplastic elastomer layer to obtain a case main body. Examples of this integral molding method include integration of the thermoplastic elastomer layer with a case or the like, formed of the material including the synthetic resin by hot press molding, and molding of the thermoplastic elastomer layer on a case or the like, formed of the material including the synthetic resin by the above-described three dimensional additive manufacturing method, and from the viewpoint of manufacturing efficiency, it is more preferable to directly mold the thermoplastic elastomer layer on a case or the like, formed of the material including the synthetic resin by the three dimensional additive manufacturing method. In this case, for the purpose of improving thermal fusion properties, the case or the like, formed of the material including the synthetic resin may be heated before or during molding by the 3D printer. This heating temperature is, for example, from 40 to 160°C.

In a particularly preferred embodiment of the first aspect of the present invention, the thermoplastic elastomer layer 61 is formed of the material including either or both of olefinic rubber and the polyolefin-based resin, and the upper case is formed of the material including the polyolefin-based resin. Forming the thermoplastic elastomer layer 61 and the upper case 22 from the same polyolefin-based material enables the used thermoplastic elastomer layer and upper case 22 to be recycled as a material together. In addition, it is also possible to manufacture a new product, such as a case, using a material that has undergone material recycling together.

In another preferred embodiment, the thermoplastic elastomer layer 61 is formed of a material including an acid-modified polyolefin-based thermoplastic elastomer, and the upper case is formed of a material including a polyamide resin.

Incidentally, in a case in which the lower case 42 has been formed of the same material as the material including the synthetic resin for forming the upper case 22, the lower case 42 can also undergo material recycling together.

The power storage unit 51 is a known secondary battery. The power storage unit 51 stores a predetermined amount of power and supplies the power to an outside. For example, the power storage unit 51 is a lithium ion battery.

The power storage unit 51 is disposed in an accommodation space S1 formed of the upper case main body 23 and the lower case main body 43.

By disposing the upper flange 24 and the lower flange 44 so as to face each other, the power storage unit 51 is held in the accommodation space S1 formed between the upper case main body 23 and the lower case main body 43.

For example, a fixing portion 56 includes a plurality of bolts 57 and a plurality of nuts 58.

A head of the bolt 57 is in contact with the upper flange 24 of the upper case 22 from above the upper flange 24. A shaft portion of the bolt 57 is inserted through a through hole of the upper case 22, a through hole of the lower case 42, and a through hole of the chassis 10.

The nut 58 is in contact with the lower flange 44 of the lower case 42 from below the lower flange 44. The nut 58 is fitted to the shaft portion of the bolt 57. The head of the bolt 57 and the nut 58 sandwich the upper flange 24, the lower flange 44, and the chassis 10 in the vertical direction.

As above, although an embodiment of the first aspect of the present invention has been described in detail with reference to the drawings, the specific configuration is not limited to this embodiment, and changes, combinations, deletions, and the like of the configuration are also included without departing from the gist of the first aspect of the present invention.

The method for recycling a battery pack described above is also one aspect of the first aspect of the present invention. Specifically, preferred is a method for manufacturing a recycled molded article, including: a recovery step of recovering the upper case and the thermoplastic elastomer layer from the battery pack according to the first embodiment of the present invention; a pulverization step of pulverizing the recovered material recovered in the recovery step; and a manufacturing step of manufacturing the recycled molded article including the pulverized product pulverized in the pulverization step as a raw material.

The recovery method in the recovery step of recovering the upper case 22 and the thermoplastic elastomer layer 61 from the battery pack of the first aspect of the present invention, is a method whereby for example, in a case in which a plurality of the bolts 57 and a plurality of the nuts 58 fastening the upper flange 24 and the lower flange 44 as the fixing portion 56 are provided, the upper case 22 and the thermoplastic elastomer layer 61 can be easily recovered by removing these bolts and nuts.

In addition, in a case where the lower case 42 is formed of the same material as the material including the synthetic resin for forming the upper case 22, it is preferable to recover the upper case 22, the lower case 42, and the thermoplastic elastomer layer 61 from the battery pack according to the first aspect of the present invention, in the recovery step.

The pulverization method in the pulverization step of pulverizing the recovered material recovered in the recovery step is not particularly limited, and for example, the recovered material may be pulverized using a cutter such as a rotary cutter. The pulverized particle size of a pulverized product obtained in the pulverization step (hereinafter, also simply referred to as "pulverized product") is not particularly limited as long as it does not interfere with the next manufacturing step, and for example, a pulverized product of Φ 1 mm may be obtained.

The manufacturing step of manufacturing a recycled molded article including the pulverized product obtained in the pulverization step as a raw material is a step of manufacturing a recycled molded article using the pulverized product as at least a part of the raw material. The content of the pulverized product in the raw material is not particularly limited as long as the effect of the first aspect of the present invention is obtained, and is preferably in the range of, for example, from 1 to 50 mass%. Containing 1 mass% or more of the pulverized product results in a sufficient recycling effect, and containing 50 mass% or less of the pulverized product, the recycled molded article to be manufactured is less likely to experience deterioration in physical properties. From the viewpoints described above, the content of the pulverized product is more preferably in the range from 2 to 30 mass% and still more preferably in the range from 3 to 10 mass%, and particularly preferably in the range from 3 to 7 mass%.

The shape of the recycled molded article is not particularly limited, and may be various shapes such as a plate, a sheet, a film, a cable, and a deformed article. The molding method is not particularly limited, and examples thereof include extrusion processing, calendering, injection molding, rolling, compression molding, press molding, and blow molding. It is to be noted that the pulverized product and a raw material other than the pulverized product can be supplied in the shape of pellet, powder, granule, filament, or the like.

The raw material other than the pulverized product is not particularly limited, and an example thereof includes the material including the synthetic resin forming the upper case 22. In addition, a publicly known additive such as an antioxidant, an ultraviolet-ray absorber, a light stabilizer, an anti-aging agent, a crosslinking agent, an antistatic agent, an antifogging agent, a plate-out preventing agent, a surface treatment agent, a fluorescent agent, a fungicide, a bactericide, a foaming agent, a metal deactivator, a release agent, a pigment, and a processing aid can be contained as necessary.

The recycled molded article is preferably used as the upper case and/or the lower case of the battery pack.

### Second Aspect of Present Invention

At present, carbon dioxide reduction and recyclability have been regarded as important for a sustainable society, but vulcanized rubber typically used as a sealing material has the problem that material recycling is difficult..

Also, as a method for fixing a sealing material to a flange portion of the case, the flange and the vulcanized rubber are generally adhered to each other with an adhesive layer such as a double-sided tape, but in such a case, the adhesive strength may not be sufficient. In addition, interposing the adhesive layer such as a double-sided tape may have impaired the sealing properties.

Therefore, an object of the present invention (the second aspect) is to provide a laminate which has high adhesive strength and excellent sealing properties and is recyclable as a material.

In order to solve the problem, the present invention (the second aspect) proposes the following means.
(1') An aspect of 2-1 of the present invention is a laminate including a thermoplastic elastomer layer on one side of a plate including a synthetic resin, in which the thermoplastic elastomer layer is in direct contact with the plate, the thermoplastic elastomer layer is formed of a material including one or both of olefinic rubber and a polyolefin-based resin, the thermoplastic elastomer layer occupies 90% or less of a surface area of the plate, and the difference between the maximum thickness and the minimum thickness of the thermoplastic elastomer layer is 1.5 mm or less.
(2') An aspect 2-2 of the present invention may be the laminate according to (1'), in which a thickness of the thermoplastic elastomer layer is 10 mm or less.
(3') An aspect 2-3 of the present invention may be the laminate according to (1') or (2'), in which the synthetic resin includes a thermoplastic resin.
(4') An aspect 2-4 of the present invention may be the laminate according to any one of (1') to (3'), in which the synthetic resin includes a polyolefin-based resin.
(5') An aspect 2-5 of the present invention may be the laminate according to any one of (1') to (4'), in which the plate is formed of a resin fiber composite material obtained by mixing a fiber with a synthetic resin.
(6') An aspect 2-6 of the present invention may be the laminate according to (5'), in which the fiber includes a glass fiber.
(7') An aspect 2-7 of the present invention may be the laminate according to (5') or (6'), in which the resin-fiber composite material is a stampable sheet.
(8') Aspect 2-8 of the present invention may be a method for manufacturing the laminate described in any one of (1') to (7'), in which the thermoplastic elastomer layer is thermally fused with the plate.
(9') Aspect 2-9 of the present invention may be a method for manufacturing the laminate described in any one of (1') to (7'), in which the thermoplastic elastomer layer is molded by a three dimensional additive manufacturing method.
(10') An aspect 2-10 of the present invention may be a battery pack using the laminate described in any one of (1') to (7').

The laminate of the present invention (the second aspect) has high adhesive strength and excellent sealing properties and is recyclable as a material.

Next, an example of the embodiment of the present invention (the second aspect) will be described in detail, provided that the present invention (the second aspect) is not limited to the embodiments described below.

### Laminate

The laminate of the second aspect of the present invention (hereinafter, also referred to as "present laminate") includes a thermoplastic elastomer layer on one surface of a plate including a synthetic resin. That is, the present laminate includes the plate including the synthetic resin, and the thermoplastic elastomer layer on one surface of the plate including the synthetic resin.

### Plate Including Synthetic Resin

The present laminate includes the plate including the synthetic resin.

Examples of the resin to be used for the synthetic resin include a thermoplastic resin, a thermosetting resin, and an elastomer resin. Examples of the thermoplastic resin include polyolefin-based resins, such as a polypropylene resin, a polyethylene resin, a poly (1-) butene resin, and a polypentene resin, a polyester resin such as polyethylene terephthalate, a polystyrene resin, an acrylonitrile-butadiene-styrene (ABS) resin, a polyvinyl acetal resin, an ethylene-vinyl acetate copolymer (EVA) resin, a polyvinyl alcohol resin, a polycarbonate resin, a polyphenylene ether resin, an acrylic resin, a polyamide resin, a polyvinyl chloride resin (PVC), a novolac resin, a polyurethane resin, and a polyisobutylene resin. Examples of the thermosetting resin include an epoxy resin, a vinyl ester resin, a urethane resin, a phenol resin, a urea resin, a melamine resin, an unsaturated polyester resin, and a polyimide resin. Examples of the elastomer resin include acrylonitrile-butadiene rubber, ethylene-propylene-diene rubber (EPDM), ethylene-propylene rubber, natural rubber, polybutadiene rubber, polyisoprene rubber, a styrene-butadiene block copolymer, a hydrogenated styrene-butadiene block copolymer, a hydrogenated styrene-butadiene-styrene block copolymer, a hydrogenated styrene-isoprene block copolymer, and a hydrogenated styrene-isoprene-styrene block copolymer. The synthetic resin may be one type of resin or a composite resin of two or more types thereof.

The content of the synthetic resin in the plate is not particularly limited, but is preferably from 15 to 80 mass%. Containing 15 mass% or more of the synthetic resin results in favorable molding processability, and containing 80 mass% or less thereof allows sufficient amounts of other components (a flame retardant, a dispersant, a fiber, and the like described later) to be contained, which can result in, for example, favorable flame blocking properties. From the viewpoints described above, the content of the synthetic resin is preferably from 35 to 70 mass%, and more preferably from 40 to 60 mass%.

Among these, from the viewpoint of recyclability, it is preferred to include the thermoplastic resin as the synthetic resin. The melt flow rate (MFR) of the entire thermoplastic resin is preferably from 40 to 500 g/10 minutes. When the MFR is 40 g/10 minutes or more, the processability is not deteriorated. Also, when it is 500 g/10 minutes or less, no burr is generated. From the viewpoints described above, the MFR is preferably in the range from 50 to 400 g/10 minutes, more preferably in the range of 60 to 400 g/10 minutes, and still more preferably in the range from 70 to 300 g/10 minutes. The MFR of the thermoplastic resin can be adjusted by, for example, controlling a hydrogen concentration during polymerization. It is to be noted that the MFR is measured in accordance with JIS K7210 under the conditions of a temperature of 230°C and a load of 2.16 kg.

The thermoplastic resin preferably includes a polyolefin-based resin. That is, the synthetic resin more preferably includes the polyolefin-based resin. Incidentally, in the second aspect of the present invention, the "polyolefin-based resin" means a resin in which the proportion of an olefin unit or a cycloolefin unit is 90 mol% or more relative to 100 mol% of all constituent units constituting the resin. The proportion of the olefin unit or cycloolefin unit is preferably 95 mol% or more and more preferably 98 mol% or more, relative to 100 mol% of all constituent units constituting the polyolefin-based resin.

Examples of the polyolefin-based resin include α-olefin polymers, such as polyethylene, polypropylene, polybutene, poly(3-methyl-1-butene), poly(3-methyl-1-pentene), and poly(4-methyl-1-pentene); α-olefin copolymers, such as an ethylene-propylene block or random copolymer, an α-olefin having 4 or more carbon atoms-propylene block or random copolymer, an ethylene-methyl methacrylate copolymer, and an ethylene-vinyl acetate copolymer; and cycloolefin polymers, such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemiisotactic polypropylene, and stereoblock polypropylene. Examples of the α-olefin having 4 or more carbon atoms in the α-olefin having 4 or more carbon atoms-propylene block or random copolymer include butene, 3-methyl-1-butene, 3-methyl-1-pentene, and 4-methyl-1-pentene. One of these polyolefin-based resins may be used alone or two or more thereof may be used in combination.

The polyolefin-based resin preferably includes polypropylene from the viewpoint of recyclability.

Polypropylene and another polyolefin-based resin may be used in combination. For example, the polyolefin-based resin, which is a mixture of polypropylene and other α-olefin polymers, such as an ethylene-propylene block or random copolymer, or an α-olefin having 4 or more carbon atoms-propylene block or random copolymer may be used.

The polyolefin-based resin is preferably mainly composed of polypropylene. The proportion of polypropylene in the polyolefin-based resin (100 mass%) is preferably 50 mass% or more and more preferably 60 mass% or more.

The plate including the synthetic resin preferably contains a flame retardant for the purpose of improving flame blocking properties. The flame retardant is not particularly limited, and examples thereof include a phosphorus-based flame retardant, a bromine-based flame retardant, and an antimony-based flame retardant. Among these, the phosphorus-based flame retardant is preferred from the viewpoint of improving flame blocking properties. From the same viewpoint, the flame retardant is preferably an intumescent-based flame retardant in terms of classification focusing on the mechanism of action of a flame retardant.

The phosphorus-based flame retardant is a phosphorus compound, that is, a compound including a phosphorus atom in the molecule. The phosphorus-based flame retardant exhibits a flame-retardant effect by forming char when burned.

The phosphorus-based flame retardant may be a known phosphorus-based flame retardant, such as a (poly)phosphate salt or a (poly)phosphate ester. The "(poly) phosphate salt" refers to a phosphate salt or polyphosphate salt. The "(poly)phosphate ester" refers to a phosphate ester or a polyphosphate ester. The phosphorus-based flame retardant is preferably in the form of solid at 80°C.

From the viewpoint of flame retardancy, the phosphorus-based flame retardant is preferably a (poly)phosphate salt.

Examples of the (poly)phosphate salt include an ammonium polyphosphate salt, a melamine polyphosphate salt, a piperazine polyphosphate salt, a piperazine orthophosphate salt, a melamine pyrophosphate salt, a piperazine pyrophosphate salt, a melamine orthophosphate salt, calcium phosphate, and magnesium phosphate. Similarly, a compound in which melamine or piperazine of the above-exemplified compound is replaced with an alternative nitrogen compound can be used. Examples of the alternative nitrogen compound include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5- triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine. One of these (poly)phosphate salts may be used alone or two or more thereof may be used in combination.

Among the phosphorus-based flame retardants described above, preferred is a salt of (poly)phosphoric acid and a nitrogen compound. The salt of (poly)phosphoric acid and the nitrogen compound is an intumescent-based flame retardant and forms a surface intumescent layer (intumescent), which is foamed char, when burned. The surface intumescent layer formed inhibits the diffusion and heat transfer of a decomposition product and exhibits excellent flame retardancy.

Examples of a nitrogen compound in the salt of (poly) phosphoric acid and the nitrogen compound include ammonia, melamine, piperazine, and the alternative nitrogen compounds described above.

Specific examples of the intumescent-based flame retardant include ammonium salts and amine salts of (poly)phosphoric acid, such as ammonium polyphosphate, melamine polyphosphate, piperazine polyphosphate, ammonium pyrophosphate, melamine pyrophosphate, and piperazine pyrophosphate.

Examples of commercially available phosphorus-based flame retardants include ADK STAB FP-2100J, FP-2200, and FP-2500S (available from ADEKA CORPORATION).

When the plate contains the flame retardant, the content of the flame retardant in the plate is not particularly limited, but is preferably from 1 to 30 mass%. Containing 1 mass% or more of the flame retardant results in favorable flame blocking properties, and containing 30 mass% or less thereof allows sufficient amounts of other components (the synthetic resin; and a dispersant, a fiber, and the like described later) to be contained, which can result in, for example, favorable molding processability. From the above viewpoints, the content of the flame retardant is more preferably from 1 to 25 mass% and still more preferably from 3 to 20 mass%.

The plate may contain a dispersant in order to enhance the dispersibility of the flame retardant in the synthetic resin. The dispersant is not particularly limited as long as it can disperse the flame retardant in the synthetic resin, and in case of using a suitable thermoplastic resin as the synthetic resin, a polymer dispersant can be suitably used in terms of miscibility with the thermoplastic resin. A polymer dispersant having a carboxyl group is preferred as the polymer dispersant, and in case of using a suitable phosphorus-based flame retardant as the flame retardant, a copolymer of an α-olefin and an unsaturated carboxylic acid (hereinafter, also referred to as "copolymer") is preferred. Using the dispersant enables improvement of dispersibility of the phosphorus-based flame retardant and reduction of the content of the flame retardant.

The phrase "copolymer of an α-olefin and an unsaturated carboxylic acid" refers to a copolymer in which the proportion of an α-olefin unit is 20 mol% or more and 80 mol% or less based on 100 mol% of the total of an α-olefin unit and an unsaturated carboxylic acid unit.

In the copolymer, the proportion of the α-olefin unit relative to the total mass of the α-olefin unit and the unsaturated carboxylic acid unit is more preferably 30 mol% or more, whereas it is more preferably 70 mol% or less. The proportion of the α-olefin equal to or more than the above-described lower limit value results in superior miscibility with the polyolefin-based resin, which is particularly preferable as the synthetic resin, and the proportion equal to or less than the above-described upper limit value results in superior miscibility with the phosphorous-based flame retardant, which is preferable as the flame retardant.

In the copolymer, the α-olefin is preferably an α-olefin having 5 or more carbon atoms and more preferably an α-olefin having 10 or more and 80 or less carbon atoms. An α-olefin 5 or more carbon atoms tends to result in more favorable miscibility with the thermoplastic resin that is suitable as the synthetic resin, whereas an α-olefin having 80 or less carbon atoms is advantageous in terms of raw material cost. The number of carbon atoms of the α-olefin is more preferably 12 or more and 70 or less and particularly preferably 18 or more and 60 or less.

In the copolymer, examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, 5-norbornene-2,3-dicarboxylic acid, and an ester, anhydride, or imide of such unsaturated carboxylic acids. The term "(meth)acrylic acid" indicates acrylic acid or methacrylic acid.

Specific examples of the ester, anhydride, or imide of an unsaturated carboxylic acid include (meth)acrylic esters such as methyl (meth)acrylate, ethyl (meth)acrylate, butyl (meth)acrylate, 2-ethylhexyl (meth)acrylate, and glycidyl (meth)acrylate; dicarboxylic anhydrides such as maleic anhydride, itaconic anhydride, citraconic anhydride, and 5-norbornene-2,3-dicarboxylic anhydride; and maleimide compounds such as maleimide, N-ethylmaleimide, and N-phenylmaleimide. One of these may be used alone or two or more thereof may be used in combination.

Among the compounds described above, esters and dicarboxylic anhydrides are preferred from the viewpoint of copolymerization reactivity. Among these, dicarboxylic anhydrides are preferred, and maleic anhydride is particularly preferred, from the viewpoint of miscibility with a phosphorus-based flame retardant suitable as the flame retardant.

The weight-average molecular weight of the copolymer is preferably 2000 or more and more preferably 3000 or more, whereas it is preferably 50000 or less and more preferably 30000 or less. Within the range of the weight-average molecular weight of the copolymer, better dispersibility of the flame retardant is achieved.

The weight-average molecular weight of the copolymer is a value in terms of standard polystyrene as measured by dissolving the copolymer in tetrahydrofuran (THF) and subjecting the solution to gel permeation chromatography.

Examples of commercially available products of the copolymer include Licolub CE2 (available from Clariant Japan K. K.) and DIACARNA 30M (available from Mitsubishi Chemical Corporation).

When the plate contains the flame retardant and the dispersant, the content of the dispersant relative to 100 parts by mass of the flame retardant in the plate is in the range of more than 0 and 25 parts by mass or less and preferably in the range from 0.01 to 10 parts by mass.

The plate including the synthetic resin may be formed of a resin fiber composite material (fiber reinforced material) in which fibers are mixed with the synthetic resin, and for example, a resin composition in which fibers such as glass fibers or carbon fibers are contained in the synthetic resin may be used, or fibers such as glass fibers or carbon fibers may be impregnated with the synthetic resin. The plate including the synthetic resin may have a flat shape, or may be partially or entirely formed into a three dimensional shape by hot press molding or the like.

The fiber preferably contains an inorganic fiber. As the inorganic fibers, various fibers can be used, and examples thereof include a glass fiber, rock wool, metal oxide fibers such as an alumina fiber and a silica-alumina fiber, a potassium titanate fiber, a calcium silicate (wollastonite) fiber, a ceramic fiber such as a ceramic fiber, a carbon fiber, and a metallic fiber. One of these inorganic fibers may be used alone or two or more thereof may be used in combination.

Among the inorganic fibers, glass fibers are preferably contained from the viewpoint of flame blocking properties and processability. That is, it is preferable that the fiber contains a glass fiber.

When the plate contains the fiber, the content of the fiber in the plate is not particularly limited, but is preferably from 1 to 80 mass%. Containing 1 mass% or more of the fiber can suppress deterioration of strength, rigidity and impact resistance, and containing 80 mass% or less thereof facilitates manufacturing and processing and also results in a weight reduction effect as a metal substitute. From the above-described viewpoints, the content of the fibers is more preferably from 3 to 60 mass%, still more preferably from 10 to 50 mass%, and particularly preferably from 30 to 45 mass%.

The resin fiber composite material is preferably a stampable sheet, more preferably a stampable sheet manufactured by impregnating a mat composed of fibers with the synthetic resin.

When the plate contains the flame retardant and the dispersant, it is preferable to manufacture a stampable sheet by impregnating a mat composed of fibers with a resin composition including the synthetic resin, the flame retardant, the dispersant, an optional additive, and the like, excluding the fibers.

A publicly known method can be used as the method for manufacturing the resin composition, and the resin composition can be manufactured by compounding, mixing, and melt-kneading the components described above. The mixing is performed using a mixer such as a tumbler, a V blender, or a ribbon blender, and the melt-kneading is performed using a single-screw extruder, a twin-screw extruder, a Banbury mixer, a roller mixer, a Brabender plastograph, or a kneader, and the resin composition is then melt-kneaded followed by its granulation.

Also, examples of the impregnation method include a method for coating a mat composed of fibers with the synthetic resin or a resin composition, and a method for fabricating a sheet of the synthetic resin or the resin composition, layering the sheet on the mat composed of fibers, and heating and melting the sheet to impregnate the mat with the sheet, and the latter method is preferable from the viewpoint of surface smoothness. More specifically, the method disclosed in WO 2022/220303 can be used.

In a case where the plate including the synthetic resin has a three dimensional shape, the plate may be manufactured by, for example, forming the stampable sheet into the shape of a case Various methods can be used, but press molding is preferred from the viewpoint of productivity. During press molding, for example, it is preferable to fabricate a stampable sheet, a plurality of which are layered and press-molded.

### Thermoplastic Elastomer Layer

The present laminate includes the thermoplastic elastomer layer. A material for forming the thermoplastic elastomer layer may be rubber alone or a composition including rubber and a thermoplastic resin, and is preferably a composition including rubber and a thermoplastic resin. Among these, from the viewpoint of recycling, a material including either or both of olefinic rubber and the polyolefin-based resin is preferable.

The thermoplastic elastomer layer formed of an elastomer including either or both of olefinic rubber and the polyolefin-based resin, which are excellent in recyclability, is melted and reformed by being reheated after use and can undergo material recycling into a new product such as a recycled molded article.

The olefinic rubber is preferably a copolymer including at least two or more α-olefin units. Examples of the α-olefin include ethylene, propylene, 1-butene, 2-methylpropylene, 1-pentene, 3-methyl-1-butene, 1-hexene, 4-methyl-1-pentene, and 1-octene. From the viewpoint of material recycling, it is preferable that ethylene having two carbon atoms and propylene having three carbon atoms are contained. Only one α-olefin may be copolymerized with ethylene, or two or more α-olefins may be copolymerized with ethylene. In addition, one type of olefinic rubber may be used alone or two or more types thereof may be used in combination.

The olefinic rubber may have another monomer unit such as a monomer unit based on a non-conjugated diene (non-conjugated diene unit) in addition to an ethylene unit and an α-olefin unit having from 3 to 8 carbon atoms. Examples of the non-conjugated diene include chain non-conjugated dienes such as 1, 4-hexadiene, 1,6-octadiene, 2-methyl-1,5-hexadiene, 6-methyl-1,5-heptadiene, and 7-methyl-1,6-octadiene; and cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, and 6-chloromethyl-5-isopropenyl-2-norbornene. Among these, 5-ethylidene-2-norbornene and dicyclopentadiene are preferable. Furthermore, an ethylene-propylene copolymer, an ethylene-propylene-diene copolymer, and an ethylene-butene copolymer may be partially or completely crosslinked. Among these, from the viewpoint of moldability and rubber elasticity, it is preferable that they are partially crosslinked.

A known polymerization method using a known catalyst for olefin polymerization is used as the method for manufacturing the olefinic rubber. For example, the catalyst for olefin polymerization, which is a Ziegler-Natta-based catalyst, or complex-based catalysts such as a metallocene-based complex and a non-metallocene-based complex, can be used, and examples of the polymerization method include a slurry polymerization method, a solution polymerization method, a bulk polymerization method, and a gas phase polymerization method. In addition, commercially available products corresponding thereto may be used. Examples of the commercially available products corresponding thereto include Engage (trade name) series available from The Dow Chemical Company, and TAFMER (trade name) series available from Mitsui Chemicals, Inc.

The polyolefin-based resin is preferably a crystalline polyolefin from the viewpoint of light weight, stable rubber elasticity, excellent mechanical properties, and favorable moldability.

The crystalline polyolefin may be an unmodified crystalline polyolefin or may be a modified crystalline polyolefin obtained by modifying a crystalline polyolefin with at least one functional group selected from the group consisting of an acid anhydride group, a carboxyl group, an amino group, an imino group, an alkoxysilyl group, a silanol group, a silyl ether group, a hydroxyl group, and an epoxy group.

Examples of the crystalline polyolefin include a propylene-based polymer and an ethylenic polymer. One of these compounds may be used alone or two or more thereof may be used in combination.

Examples of the propylene-based polymer include a propylene homopolymer, and a propylene-based copolymer which is a random or block copolymer of polypropylene with ethylene or an α-olefin such as 1-butene or 1-hexene.

The melt flow rate (JIS K 7210, 230°C, a load of 21.2 N) of the propylene-based polymer is not particularly limited, but is usually 0.05 to 200 g/10 minutes, preferably 0.05 to 100 g/10 minutes, and more preferably 0.1 to 80 g/10 minutes. The melt flow rate within the above-described range can achieve excellent moldability, favorable appearance of the thermoplastic elastomer layer to be obtained, and controlled mechanical properties within a desired range.

A commercially available product corresponding to the propylene-based polymer can also be used. Commercially available polypropylene is available from the following manufacturers and the like and can be appropriately selected.

Examples of the commercially available products include NOVATEC (trade name) PP from Japan Polypropylene Corporation, Prime Polypro (trade name) from Prime Polymer Co., Ltd., Sumitomo NOBLEN (trade name) from Sumitomo Chemical Co., Ltd., a polypropylene block copolymer from SunAllomer Ltd., Moplen (trade name) and Circluen from LyondellBasell Industries Inc., ExxonMobil PP from ExxonMobil Corporation, Formolene (trade name) from Formosa Plastics Corporation, Borealis PP from Borealis GmbH, SEETEC PP from LG Chem Ltd., ASI POLYPROPYLENE from A. Schulman, Inc., INEOS PP from INEOS Olefins & Polymers USA, LLC, Braskem PP from Braskem S. A., Sumsung Total from Samsung Total Petrochemicals Co., Ltd., Sabic (trade name) PP from SABIC (Saudi Basic Industries Corporation), TOTAL PETROCHEMICALS Polypropylene from Total Petrochemicals USA Inc., and YUPLENE (trade name) from SK Inc.

Examples of the ethylenic polymer include high-density polyethylene, low-density polyethylene, and linear low-density polyethylene.

The ethylenic polymer preferably has a density of 0.910 g/cm³ or more and 1.00 g/cm³ or less as measured in accordance with JIS K 7112 from the viewpoint of achieving both mechanical properties and rubber elasticity.

The melt flow rate (JIS K 7210, 190°C, a load of 21.2 N) of the ethylenic polymer is not particularly limited, but is usually 0.05 to 200 g/10 minutes, preferably 0.05 to 100 g/10 minutes, and more preferably 0.1 to 80 g /10 minutes. The melt flow rate within the above-described range can achieve excellent moldability, favorable appearance of the thermoplastic elastomer layer to be obtained, and controlled mechanical properties within a desired range.

The molecular weights of the propylene-based polymer and the ethylenic polymer are not particularly limited, but they preferably contain a resin having a weight-average molecular weight from 500 to 1500000 as measured by gel permeation chromatography (GPC). The weight-average molecular weight is more preferably 1000 to 1000000 and still more preferably 2000 to 500000.

It is to be noted that the weight-average molecular weight is determined using standard polystyrene as a molecular weight standard substance.

As described above, the thermoplastic elastomer layer is preferably formed of the material including either or both of olefinic rubber and the polyolefin-based resin, more preferably formed of a material including at least the polyolefin-based resin, and still more preferably formed of a composition including olefinic rubber and the polyolefin-based resin or a composition including a rubber component other than olefinic rubber and the polyolefin-based resin. When the thermoplastic elastomer layer is formed of a composition including the rubber component other than olefinic rubber and the polyolefin-based resin, a composition containing the polyolefin-based resin and styrene-based copolymer rubber as the rubber component other than olefinic rubber, is preferable.

The composition including the rubber and the thermoplastic resin may include a hydrocarbon-based softening agent for rubber from the viewpoint of improving the processability and flowability of the composition.

Examples of the hydrocarbon-based softening agent for rubber include a mineral oil-based softening agent and a synthetic resin-based softening agent with the mineral oil-based softening agent being particularly preferred. The mineral oil-based softening agent is generally a mixture of an aromatic hydrocarbon, a naphthenic hydrocarbon, and a paraffinic hydrocarbon, and a softening agent in which 50% or more of the total carbon atoms is a paraffinic hydrocarbon is referred to as a paraffinic oil, a softening agent in which from 30 to 45% of the total carbon atoms is a naphthenic hydrocarbon is referred to as a naphthenic oil, and a softening agent in which 35% or more of the total carbon atoms is an aromatic hydrocarbon is referred to as an aromatic oil. Among these, a paraffinic oil is preferable.

The kinematic viscosity of the hydrocarbon-based softening agent for rubber at 40°C is preferably 20 centistokes (cSt) or more and more preferably 50 cSt or more. The kinematic viscosity is, on the other hand, preferably 800 cSt or less and more preferably 600 cSt or less. The flash point (COC method) of the hydrocarbon-based softening agent for rubber is preferably 200°C or higher and more preferably 250°C or higher.

A commercially available product may be used as the hydrocarbon-based softening agent for rubber. Examples of the commercially available products include "Nisseki Polybutene (trade name) HV" series available from ENEOS Corporation, "Diana (trade name) Process Oil PW" series available from Idemitsu Kosan Co., Ltd., and "VIVA-B-FIX" (trade name) series available from H&R Co., Ltd.

One hydrocarbon-based softening agent for rubber can be used alone or two or more thereof can be used in any combination and at any proportion.

A commercially available product can be used as the composition including olefinic rubber and a polyolefin-based resin. Examples thereof include Milastomer (trade name) available from Mitsui Chemicals, Inc., ESPOLEX (trade name) TPE Series available from SUMITOMO CHEMICAL CO., LTD., Thermolane (trade name) available from Mitsubishi Chemical Corporation, Trexprene (trade name) available from Mitsubishi Chemical Corporation, Tefabloc (trade name) TPO available from Mitsubishi Chemical Corporation, Santoprene (trade name) available from Celanese Corporation, Sarlink (trade name) available from TOYOBO MC Corporation, and DAWNPRENE (trade name) available from Shandong Dawn Polymer Co., Ltd.

The composition including styrene-based copolymer rubber and a polyolefin-based resin, which is a commercially available product can also be used. Examples thereof include Tefabloc (trade name) TPS available from Mitsubishi Chemical Corporation, Rheostmer (trade name) available from RIKEN TECHNOS CORPORATION, Elastomer AR (trade name) available from Aron Kasei Co., Ltd., Alostomer (trade name) available from Aron Kasei Co., Ltd., Ahneston (trade name) available from Kuraray Plastics Co., Ltd., and THERMOLAST (trade name) manufactured KRAIBURG TPE GMBH & CO. KG.

The thermoplastic elastomer layer may be imparted with flame retardancy in order to suppress rupture at the time of thermal runaway. For example, as the material for forming the thermoplastic elastomer layer, a composition that contains rubber alone and/or a composition including rubber and a thermoplastic resin and that also contains a flame retardant may be used. The flame retardant which is exemplified as a flame retardant that may be contained in the plate including the synthetic resin can be preferably used. In order to enhance the dispersibility of the flame retardant in the rubber alone and/or the composition including rubber and a thermoplastic resin, in the material for forming the thermoplastic elastomer layer, a dispersant may be contained. The dispersant, which is exemplified as a dispersant that may be contained in the plate including the synthetic resin can be preferably used.

In a case where the material for forming the thermoplastic elastomer layer contains the flame retardant or the dispersant, the proportion of the rubber alone and/or the composition including rubber and a thermoplastic resin relative to the total mass of the material for forming the thermoplastic elastomer layer is preferably 20 mass% or more, more preferably 30 mass% or more, still more preferably 40 mass% or more, even still more preferably 45 mass% or more, and particularly preferably 50 mass% or more, whereas, the proportion is preferably 80 mass% or less, more preferably 70 mass% or less, and still more preferably less than 60 mass%. The proportion of the rubber alone or the composition including rubber and a thermoplastic resin equal to or more than the above-described lower limit value increases the likelihood of exhibiting the physical properties inherent in the rubber alone or the composition including rubber and a thermoplastic resin, and the proportion equal to or less than the above-described upper limit value renders superior flame retardancy.

The proportion of the flame retardant relative to the total mass of the material for forming the thermoplastic elastomer layer is preferably 35 mass% or more, more preferably 38 mass% or more, still more preferably 40 mass% or more, and on the other hand, it is preferably 50 mass% or less, more preferably 48 mass% or less, and still more preferably 45mass% or less. The proportion of the flame retardant equal to or more than the above-described lower limit value renders superior flame retardancy, and the proportion equal to or less than the above-described upper limit value facilitates exhibition of the physical properties (for example, high mechanical properties and flexibility) inherent in the rubber alone or the composition including rubber and a thermoplastic resin.

The proportion of the dispersant relative to the total mass of the material for forming the thermoplastic elastomer layer is preferably 0.01 mass% or more, more preferably 0.03 mass% or more, still more preferably 0.1 mass% or more, even still more preferably 0.5 mass% or more, and particularly preferably 1 mass% or more, and on the other hand, it is preferably 10 mass% or less, more preferably 5 mass% or less, and still more preferably 3 mass% or less. The proportion of the dispersant equal to or more than the above-described lower limit value allows favorable dispersion of the flame retardant, resulting in not only favorable flame retardancy and high degree of flexibility and mechanical properties of the material for forming the thermoplastic elastomer layer but also the favorable appearance of the thermoplastic elastomer layer to be obtained. The proportion of the dispersant equal to or less than the above-described upper limit value inhibits the material for forming the thermoplastic elastomer layer from being affected on its flame retardancy due to the dispersant.

In addition, the thermoplastic elastomer layer may be imparted with conductivity in order to shield electromagnetic waves. For example, as the material for forming the thermoplastic elastomer layer, a composition that contains rubber alone and/or a composition including rubber and a thermoplastic resin and that also contains a conductive agent may be used, and the material for forming the thermoplastic elastomer layer and a composition including the conductive agent may be subjected to two-color molding. A publicly known conductive agent may be used as the conductive agent.

An optional method is used in order to manufacture the material forming the thermoplastic elastomer layer. Examples thereof include a method involving sufficient mixing using a preliminary mixing means such as a V-type blender, a Henschel mixer, a mechanochemical apparatus, or an extrusion mixer, optionally granulation by an extrusion granulator, a briquetting machine, or the like, and then melt-kneading by a melt-kneader, followed by extrusion. Examples of the melt-kneader include a twin-screw extruder such as a vent-type twin-screw extruder, a Banbury mixer, a kneading roll, a single-screw extruder, and a multi-screw extruder having three or more screws. A temperature during melt-kneading is, for example, 170°C or higher and 260°C or lower.

The material for forming the thermoplastic elastomer layer extruded as described above is directly cut and pelletized by equipment such as a pelletizer, or cooled to form a strand, which is then cut and pelletized by equipment such as a pelletizer.

The thermoplastic elastomer layer is obtained by molding the material for forming the thermoplastic elastomer layer. Examples of the molding method include extrusion processing, calendering, injection molding, rolling, compression molding, press molding, blow molding, and three dimensional additive manufacturing, and molding is preferably performed by the three dimensional additive manufacturing method.

The three dimensional additive manufacturing method is shaping by a 3D printer, and a printer of material extrusion method (MEX method) is preferably used as the 3D printer. The material for forming the thermoplastic elastomer layer can be supplied to the 3D printer in the shape of pellet, powder, granule, filament, or the like, and it is desirable to mold the material using a 3D printer of a type that can use a shaping material in the shape of pellet or granule. An example of such a printer includes a printer in which an extrusion nozzle is controllably driven by a gantry system, or by a robot arm system. A temperature during molding of the material forming the thermoplastic elastomer layer is, for example, from 170 to 260°C.

In the present laminate, the thermoplastic elastomer layer is in direct contact with the plate. Examples of a method for manufacturing such a laminate include a method for molding the thermoplastic elastomer layer alone by three dimensional additive manufacturing or the like and then integrating the molded layer with the plate, and a method for directly molding the thermoplastic elastomer layer on the plate, but the thermoplastic elastomer layer is preferably directly molded on the plate as described later. Such a method has an advantage that an adhesive layer is not required, and a laminate having high adhesive strength and excellent sealing properties is obtained.

Among these, the thermoplastic elastomer layer is preferably thermally fused with the plate including the synthetic resin. Adopting such a method also makes it possible to integrally mold the plate and the thermoplastic elastomer layer to obtain a laminate. Examples of this integral molding method include integration of the thermoplastic elastomer layer and the plate by hot press molding, and molding of the thermoplastic elastomer layer on the plate by the three dimensional additive manufacturing method described above, and from the viewpoint of manufacturing efficiency, it is more preferable to directly mold the thermoplastic elastomer layer on the plate by the three dimensional additive manufacturing method. At this time, for the purpose of improving the thermal fusion properties, the plate may be heated before or during molding by the 3D printer. This heating temperature is, for example, from 40 to 160°C.

In a particularly preferred aspect of the second aspect of the present invention, the plate is formed from a material including the polyolefin-based resin as the synthetic resin, and the thermoplastic elastomer layer is formed from a material including either or both of olefinic rubber and the polyolefin-based resin. That is, the thermoplastic elastomer layer and the plate are formed from the same polyolefin-based material, which enables the used thermoplastic elastomer layer and plate to be recycled as a material together.

In another preferred aspect, a laminate is formed of a material including an acid-modified polyolefin-based thermoplastic elastomer as the thermoplastic elastomer layer, and from a plate including a polyamide resin as the synthetic resin.

In the present laminate, the thermoplastic elastomer layer occupies 90% or less of a surface area of the plate. Since the thermoplastic elastomer layer is bonded so as to occupy 90% or less of the surface area of the plate, a minimum material necessary for exhibiting the effect of sealing properties will be used, thereby providing effects such as weight reduction and cost reduction. On the other hand, the thermoplastic elastomer layer bonded so as to occupy preferably 0.1% or more of the surface area of the plate can exhibit sufficient sealing properties. From such a viewpoint, the thermoplastic elastomer layer preferably occupies 80% or less, more preferably 70% or less, more preferably 0.3% or more, and still more preferably 0.5% or more, of the surface area of the sheet.

A thickness of the thermoplastic elastomer layer is preferably 10 mm or less, more preferably 8 mm or less, and still more preferably 6mm or less, from the viewpoint of weight reduction and cost reduction. On the other hand, a thickness of the thermoplastic elastomer layer is preferably 1 mm or more, more preferably 1.5 mm or more, from the viewpoint of exhibiting sufficient sealing properties.

The difference between the maximum thickness and the minimum thickness of the thermoplastic elastomer layer is 1.5 mm or less. When the difference between the maximum thickness and the minimum thickness is 1.5 mm or less, the thickness deviation is small, and therefore the thermoplastic elastomer layer is not uneven, and the thermoplastic elastomer layer does not float from the plate, and the sealing properties are excellent. In addition, even when another material is bonded to the surface of the thermoplastic elastomer layer opposite to the plate, the thermoplastic elastomer layer is not uneven and has excellent sealing properties. The smaller the difference between the maximum thickness and the minimum thickness, the more favorable, and the lower limit value is 0. From this viewpoint, the difference between the maximum thickness and the minimum thickness is preferably 1.3 mm or less and more preferably 1.0 mm or less. An example of a method for reducing the difference includes a method for optimizing a shaped shape, a shaping path, an ejection amount, an ejection width, and the like at the time of molding by a 3D printer. For example, when the shaping path has a shape that is bent at a right angle or an acute angle, the resin is retained at a bent portion, and a material (elastomer) for forming the thermoplastic elastomer layer is likely to be uneven. In addition, in a case where the paths are overlapped at the start point and the end point of the shaping path, unevenness is likely to occur at the overlapping portion, and thus it is preferable to adjust an ejection amount, an ejection width, and the like. In this case, it is preferable to adjust the ejection amount, ejection width, and the like within a range in which the size of the unevenness does not affect the sealing properties so that a gap is not generated between the passes at a portion where the passes are overlapped.

It is to be noted that the maximum thickness and the minimum thickness of the thermoplastic elastomer layer as used herein refer to the maximum thickness and the minimum thickness of the thermoplastic elastomer layer disposed in a frame shape so as to surround a periphery of an accommodation portion in a battery pack described later. In this case, the thermoplastic elastomer layer may be formed in one layer when layered by the 3D printer or may be layered in two or more layers.

### Battery Pack

The battery pack according to the second aspect of the present invention (hereinafter, also referred to as "the present battery pack") uses the present laminate. The present laminate in the present battery pack corresponds to the thermoplastic elastomer layer 61 and the upper case 22, and/or the thermoplastic elastomer layer 61 and the lower case 42 described later. That is, the thermoplastic elastomer layer in the present structural body corresponds to the thermoplastic elastomer layer 61, and the plate including the synthetic resin corresponds to the upper case 22 and/or the lower case 42. Also, a layered portion of the thermoplastic elastomer layer and the plate corresponds to the thermoplastic elastomer layer 61 and the upper flange 24, and/or the thermoplastic elastomer layer 61 and the lower flange 44.

Hereinafter, an electric vehicle in which an embodiment of the battery pack according to the second aspect of the present invention is used will be described with reference to FIG. 1.

As shown in FIG. 1, this electric vehicle 1 includes the chassis 10, tires 15, and the battery pack 20 of the present embodiment.

For example, the chassis 10 of the present embodiment constitutes a part of the framework of the electric vehicle 1. The chassis 10 extends along a horizontal plane. The phrase "A is along B" means that an angle formed by the A and the B is 30 degrees or less. This angle formed is more preferably 15 degrees or less. For example, the A corresponds to the chassis 10, and the B corresponds to a horizontal plane.

The chassis 10 supports a motor (not shown).

The opening portion 10a penetrated in its vertical direction is formed in the chassis 10. A plurality of through holes (reference signs omitted) penetrated in the vertical direction are formed in a peripheral edge portion of the opening portion 10a in the chassis 10.

The battery pack 20 is supported by the chassis 10. The battery pack 20 stores electric power. The battery pack 20 supplies stored electric power to a motor based on an instruction of an operator of the electric vehicle 1. The battery pack 20 will be described in detail later.

The tire 15 is rotatably supported by the chassis 10 via a suspension (not shown). The motor rotates the tire 15 in a predetermined direction.

As shown in FIG. 1, the battery pack 20 includes the case 21, the power storage unit 51, and the fixing portion 56. The case 21 has the upper case 22 and the lower case 42.

The upper case 22 has the upper case main body 23 and the upper flange 24.

The upper case main body 23 is formed in a topped cylindrical shape. That is, the upper case main body 23 has the upper sidewall 32 and the top wall 33. Thus, the power storage unit 51 can be accommodated in a part of the accommodation space S1 formed in the upper sidewall 32.

The upper sidewall 32 is formed in a rectangular cylindrical shape (cylindrical shape) exhibiting a rectangular edge shape when viewed in its vertical direction. Hereinafter, a direction along one outer edge (short side) of the upper sidewall 32 when viewed in the vertical direction is referred to as a first direction X. The first direction X is a direction along a horizontal plane. Hereinafter, a direction orthogonal to the vertical direction and orthogonal to the first direction X is referred to as a second direction Y.

The shape of the upper sidewall 32 is not limited thereto and may be formed in a cylindrical shape or the like exhibiting a triangular or pentagonal edge shape or a polygonal edge shape having more than five angles, or a circular edge shape when viewed in the vertical direction.

The top wall 33 clogs an opening formed in an upper end portion of the upper sidewall 32. Hereinafter, the central axis of the top wall 33 is referred to as the axis O1. For example, the axis O1 is an axis that passes through the center of gravity of the top wall 33 and extends along the vertical direction.

The upper flange 24 protrudes from the outer peripheral edge of the lower end portion of the upper sidewall 32 of the upper case main body 23 toward the outside of the upper sidewall 32 along the horizontal plane. The term "outside" as used herein means a direction away from the axis O1.

The upper flange 24 protrudes over the entire circumference of the upper sidewall 32. Incidentally, the upper flange 24 may protrude only from a part of the upper sidewall 32 in the circumferential direction (a part around the axis O1).

The upper flange 24 has a plurality of through holes (reference signs omitted) penetrated in the vertical direction. The plurality of through holes are disposed with a space from each other around the upper sidewall 32.

The upper case main body 23 and the upper flange 24 of the upper case 22 are integrally formed of a resin material.

As shown in FIG. 1, the lower case 42 has the lower case main body 43 and the lower flange 44.

The lower case main body 43 is formed in a bottomed cylindrical shape. That is, the lower case main body 43 has the lower sidewall 47 and the bottom wall 48.

Similarly to the upper sidewall 32, the lower sidewall 47 is formed in a rectangular cylindrical shape having a rectangular edge shape when viewed in the vertical direction. The bottom wall 48 clogs an opening formed in a lower end portion of the lower sidewall 47.

The lower flange 44 protrudes outward from the outer peripheral edge of the lower sidewall 47 of the lower case main body 43 along the horizontal plane. The lower flange 44 is disposed to face the upper flange 24 from below the upper flange 24. The phrase "A faces B" means that A and B face each other with a space therebetween.

The lower flange 44 has a plurality of through holes (reference signs omitted) penetrated in the vertical direction. The plurality of through holes are arranged with a space from each other around the lower sidewall 47.

The lower case 42 (including the lower case main body 43 and the lower flange 44) may be integrally formed of the same material as a resin material for forming the upper case 22, or may be formed of iron, aluminum, or the like.

The thermoplastic elastomer layer 61 is formed of the material for forming the thermoplastic elastomer layer, and is formed between the upper flange 24 and the lower flange 44. That is, the thermoplastic elastomer layer 61 is provided between the upper flange 24 and the lower flange 44.

An adhesive layer or the like may be provided between the thermoplastic elastomer layer 61 and the upper flange 24 or between the thermoplastic elastomer layer 61 and the lower flange 44, but the thermoplastic elastomer layer 61 is in direct contact with at least one of the upper flange 24 and the lower flange 44 from the viewpoint of waterproofing and dustproofing properties and the viewpoint of suppressing an increase in the number of components. The thermoplastic elastomer layer 61 may be in contact with the through hole or may be disposed at a position away from the through hole. In addition, the thermoplastic elastomer layer 61 may be provided only on the power storage unit side of the through hole.

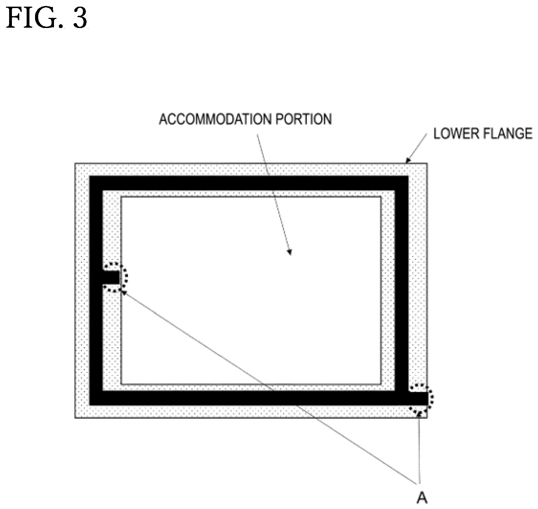

The thermoplastic elastomer layer also functions as a sealing material for the purpose of waterproofing and dustproofing, and is therefore disposed in a frame shape so as to surround a periphery of the accommodation portion so that water and dust do not enter the accommodation space S1. For example, as shown in FIG. 3, the thermoplastic elastomer layer is installed on the lower flange. Although not shown, the same can be applied to the upper flange. In this case, the maximum thickness and the minimum thickness of the thermoplastic elastomer layer described above refer to the maximum thickness and the minimum thickness of the thermoplastic elastomer layer disposed in a frame shape so as to surround a periphery of the accommodation portion. For example, in a portion having a shape that protrudes outward or inward from the periphery of the accommodation portion as in the portion A in FIG. 3, it is considered that the sealing properties are not affected even if the thickness is extremely small. The "maximum thickness and minimum thickness of the thermoplastic elastomer layer" referred to in the present patent do not cover the thickness of the portion having a shape protruding outward or inward from the peripheral portion of the accommodation portion, such as the portion A.

The power storage unit 51 is a known secondary battery. The power storage unit 51 stores a predetermined amount of power and supplies the power to an outside. For example, the power storage unit 51 is a lithium ion battery.

The power storage unit 51 is disposed in an accommodation space S1 formed of the upper case main body 23 and the lower case main body 43.

By disposing the upper flange 24 and the lower flange 44 so as to face each other, the power storage unit 51 is held in the accommodation space S1 formed between the upper case main body 23 and the lower case main body 43.

For example, the fixing portion 56 includes a plurality of the bolts 57 and a plurality of the nuts 58.

A head of the bolt 57 is in contact with the upper flange 24 of the upper case 22 from above the upper flange 24. A shaft portion of the bolt 57 is inserted through a through hole of the upper case 22, a through hole of the lower case 42, and a through hole of the chassis 10.

The nut 58 is in contact with the lower flange 44 of the lower case 42 from below the lower flange 44. The nut 58 is fitted to the shaft portion of the bolt 57. The head of the bolt 57 and the nut 58 sandwich the upper flange 24, the lower flange 44, and the chassis 10 in the vertical direction.

The battery pack 20 may have various configurations as described below.

In the battery pack of the first modification, in each configuration of the battery pack 20 of the present embodiment, the upper case body 23 and the upper flange 24 of the upper case 22 are formed of iron, aluminum, or the like instead of a resin material, and the lower case main body 43 and the lower flange 44 of the lower case 42 are formed of a resin material instead of iron, aluminum, or the like.

### Third Aspect of Present Invention

At present, carbon dioxide reduction and recyclability have been regarded as important for a sustainable society, but vulcanized rubber typically used as a sealing material has the problem that material recycling is difficult.

Also, as a method for fixing a sealing material to a flange portion of the case, the flange and the vulcanized rubber are generally adhered to each other with an adhesive layer such as a double-sided tape, but in such a case, the adhesive strength may not be sufficient. In addition, interposing the adhesive layer such as a double-sided tape may have impaired the sealing properties.

Therefore, an object of the present invention (the third aspect) is to provide a method for manufacturing a molded body having high adhesive strength and excellent sealing properties and being recyclable as a material.

In order to solve this problem, the present invention (the third aspect) proposes the following means.
(1") An aspect 3-1 of the present invention is a method for manufacturing a molded body in which a thermoplastic elastomer layer is layered on a structural body including a thermoplastic resin by thermal fusion, in which the thermoplastic elastomer layer is formed of a material including either or both of olefinic rubber and a polyolefin-based resin, and the thermoplastic elastomer layer is layered using a 3D printer so that a difference between a maximum thickness and a minimum thickness in the thermoplastic elastomer layer is 1.5 mm or less.
(2") An aspect 3-2 of the present invention may be the method for manufacturing a molded body according to (1"), in which the thermoplastic elastomer layer is directly layered on the structural body.
(3") An aspect 3-3 of the present invention may be the method for manufacturing a molded body according to (1") or (2"), in which a thickness of the thermoplastic elastomer layer is 10 mm or less.
(4") An aspect 3-4 of the present invention may be the method for manufacturing a molded body according to any one of (1") to (3"), in which the 3D printer uses a material extrusion method (MEX method).
(5") An aspect 3-5 of the present invention may be the method for manufacturing a molded body according to any one of (1") to (4"), in which a temperature during layering of the thermoplastic elastomer layer is from 170 to 260°C.
(6") An aspect 3-6 of the present invention may be the method for manufacturing a molded body according to any one of (1") to (5"), in which the thermoplastic resin includes a polyolefin-based resin.
(7") An aspect 3-7 of the present invention may be the method for manufacturing a molded body according to any one of (1") to (6"), in which the structural body has a three dimensional shape.
(8") An aspect 3-8 of the present invention may be the method for manufacturing a molded body according to any one of (1") to (7"), in which the structural body is formed from a resin fiber composite material obtained by mixing a fiber with a thermoplastic resin.
(9") An aspect 3-9 of the present invention may be the method for manufacturing a molded body according to (8"), in which the fiber includes a glass fiber.
(10") An aspect 3-10 of the present invention may be the method for manufacturing a molded body according to any one of (1") to (9"), in which the method is used for a battery pack.

According to the present invention (the third aspect), it is possible to provide a method for manufacturing a molded body having high adhesive strength and excellent sealing properties and being recyclable as a material.

Next, an example of the embodiment of the present invention (the third aspect) will be described in detail, provided that the present invention (the third aspect) is not limited to the embodiments described below.

### Molded Body

The molded body of the third aspect of the present invention (hereinafter, also referred to as "the present molded body") includes a thermoplastic elastomer layer on a structural body including a thermoplastic resin. That is, the present molded body includes the structural body including the thermoplastic resin, and the thermoplastic elastomer layer on one surface of the structural body including the thermoplastic resin.

### Structural Body Including Thermoplastic Resin

The present molded body includes the structural body including the thermoplastic resin.

Examples of the thermoplastic resin include polyolefin-based resins, such as a polypropylene resin, a polyethylene resin, a poly (1-) butene resin, and a polypentene resin, a polyester resin such as polyethylene terephthalate, a polystyrene resin, an acrylonitrile-butadiene-styrene (ABS) resin, a polyvinyl acetal resin, an ethylene-vinyl acetate copolymer (EVA) resin, a polyvinyl alcohol resin, a polycarbonate resin, a polyphenylene ether resin, an acrylic resin, a polyamide resin, a polyvinyl chloride resin (PVC), a novolac resin, a polyurethane resin, and a polyisobutylene resin. The thermoplastic resin may be one type of resin or a composite resin of two or more types thereof.

The content of the thermoplastic resin in the structural body is not particularly limited, but is preferably from 15 to 80 mass%. Containing 15 mass% or more of the thermoplastic resin results in favorable molding processability, and containing 80 mass% or less thereof allows sufficient amounts of other components (a flame retardant, a dispersant, an inorganic fiber, and the like as described later) to be contained, which can result in, for example, favorable flame blocking properties. From the viewpoints described above, the content of the thermoplastic resin is preferably from 35 to 70 mass% and more preferably from 40 to 60 mass%.

The melt flow rate (MFR) of the entire thermoplastic resin is preferably from 40 to 500 g/10 minutes. When the MFR is 40 g/10 minutes or more, the processability is not deteriorated. Also, when it is 500 g/10 minutes or less, no burr is generated. From the viewpoints described above, the MFR is preferably in the range from 50 to 400 g/10 minutes, more preferably in the range of 60 to 400 g/10 minutes, and still more preferably in the range from 70 to 300 g/10 minutes. The MFR of the thermoplastic resin can be adjusted by, for example, controlling a hydrogen concentration during polymerization. It is to be noted that the MFR is measured in accordance with JIS K7210 under the conditions of a temperature of 230°C and a load of 2.16 kg.

That is, the thermoplastic resin preferably includes a polyolefin-based resin. Incidentally, in the third aspect of the present invention, the term "polyolefin-based resin" means a resin in which the proportion of an olefin unit or a cycloolefin unit is 90 mol% or more relative to 100 mol% of all constituent units constituting the resin. The proportion of the olefin unit or cycloolefin unit is preferably 95 mol% or more and more preferably 98 mol% or more, relative to 100 mol% of all constituent units constituting the polyolefin-based resin.

Examples of the polyolefin-based resin include α-olefin polymers, such as polyethylene, polypropylene, polybutene, poly(3-methyl-1-butene), poly(3-methyl-1-pentene), and poly(4-methyl-1-pentene); α-olefin copolymers, such as an ethylene-propylene block or random copolymer, an α-olefin having 4 or more carbon atoms-propylene block or random copolymer, an ethylene-methyl methacrylate copolymer, and an ethylene-vinyl acetate copolymer; and cycloolefin polymers, such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemiisotactic polypropylene, and stereoblock polypropylene. Examples of the α-olefin having 4 or more carbon atoms in the α-olefin having 4 or more carbon atoms-propylene block or random copolymer include butene, 3-methyl-1-butene, 3-methyl-1-pentene, and 4-methyl-1-pentene. One of these polyolefin-based resins may be used alone or two or more thereof may be used in combination.

The polyolefin-based resin preferably includes polypropylene from the viewpoint of recyclability.

Polypropylene and another polyolefin-based resin may be used in combination. For example, the polyolefin-based resin, which is a mixture of polypropylene and other α-olefin polymers, such as an ethylene-propylene block or random copolymer, or an α-olefin having 4 or more carbon atoms-propylene block or random copolymer may be used.

The polyolefin-based resin is preferably mainly composed of polypropylene. The proportion of polypropylene in the polyolefin-based resin (100 mass%) is preferably 50 mass% or more and more preferably 60 mass% or more.

The structural body including the thermoplastic resin preferably contains a flame retardant for the purpose of improving the flame blocking properties. The flame retardant is not particularly limited, and examples thereof include a phosphorus-based flame retardant, a bromine-based flame retardant, and an antimony-based flame retardant. Among these, the phosphorus-based flame retardant is preferred from the viewpoint of improving flame blocking properties. From the same viewpoint, the flame retardant is preferably an intumescent-based flame retardant in terms of classification focusing on the mechanism of action of a flame retardant.

The phosphorus-based flame retardant is a phosphorus compound, that is, a compound including a phosphorus atom in the molecule. The phosphorus-based flame retardant exhibits a flame-retardant effect by forming char when burned.

The phosphorus-based flame retardant may be a known phosphorus-based flame retardant, such as a (poly)phosphate salt or a (poly)phosphate ester. The "(poly) phosphate salt" refers to a phosphate salt or polyphosphate salt. The "(poly)phosphate ester" refers to a phosphate ester or a polyphosphate ester. The phosphorus-based flame retardant is preferably in the form of solid at 80°C.

From the viewpoint of flame retardancy, the phosphorus-based flame retardant is preferably a (poly)phosphate salt.

Examples of the (poly)phosphate salt include an ammonium polyphosphate salt, a melamine polyphosphate salt, a piperazine polyphosphate salt, a piperazine orthophosphate salt, a melamine pyrophosphate salt, a piperazine pyrophosphate salt, a melamine orthophosphate salt, calcium phosphate, and magnesium phosphate. Similarly, a compound in which melamine or piperazine of the above-exemplified compound is replaced with an alternative nitrogen compound can be used. Examples of the alternative nitrogen compound include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5- triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine. One of these (poly)phosphate salts may be used alone or two or more thereof may be used in combination.

Among the phosphorus-based flame retardants described above, preferred is a salt of (poly)phosphoric acid and a nitrogen compound. The salt of (poly)phosphoric acid and the nitrogen compound is an intumescent-based flame retardant and forms a surface intumescent layer (intumescent), which is foamed char, when burned. The surface intumescent layer formed inhibits the diffusion and heat transfer of a decomposition product and exhibits excellent flame retardancy.

Examples of a nitrogen compound in the salt of (poly) phosphoric acid and the nitrogen compound include ammonia, melamine, piperazine, and the alternative nitrogen compounds described above.

Specific examples of the intumescent-based flame retardant include ammonium salts and amine salts of (poly)phosphoric acid, such as ammonium polyphosphate, melamine polyphosphate, piperazine polyphosphate, ammonium pyrophosphate, melamine pyrophosphate, and piperazine pyrophosphate.

Examples of commercially available phosphorus-based flame retardants include ADK STAB FP-2100J, FP-2200, and FP-2500S (available from ADEKA CORPORATION).

When the structural body contains the flame retardant, the content of the flame retardant in the structural body is not particularly limited, but is preferably from 1 to 30 mass%. Containing 1 mass% or more of the flame retardant results in favorable flame blocking properties, and containing 30 mass% or less allows sufficient amounts of other components (the thermoplastic resin; and a dispersant, a fiber, and the like as described later) to be contained, which can result in, for example, favorable molding processability. From the above viewpoints, the content of the flame retardant is more preferably from 1 to 25 mass% and still more preferably from 3 to 20 mass%.

The structural body may contain a dispersant in order to enhance the dispersibility of the flame retardant in the thermoplastic resin. The dispersant is not particularly limited as long as it can disperse the flame retardant in the thermoplastic resin, and a polymer dispersant can be suitably used in terms of the miscibility with the thermoplastic resin. A polymer dispersant having a carboxyl group is preferred as the polymer dispersant, and in case of using a suitable phosphorus-based flame retardant as the flame retardant, a copolymer of an α-olefin and an unsaturated carboxylic acid (hereinafter, also referred to as "copolymer") is preferred. Using the dispersant enables improvement of dispersibility of the phosphorus-based flame retardant and reduction of the content of the flame retardant.

The phrase "copolymer of an α-olefin and an unsaturated carboxylic acid" refers to a copolymer in which the proportion of an α-olefin unit is 20 mol% or more and 80 mol% or less based on 100 mol% of the total of an α-olefin unit and an unsaturated carboxylic acid unit.

In the copolymer, the proportion of the α-olefin unit relative to the total mass of the α-olefin unit and the unsaturated carboxylic acid unit is more preferably 30 mol% or more, whereas it is more preferably 70 mol% or less. The proportion of the α-olefin equal to or more than the above-described lower limit value results in superior miscibility with the polyolefin-based resin, which is particularly preferable as the thermoplastic resin, and the proportion equal to or less than the above-described upper limit value results in superior miscibility with the phosphorous-based flame retardant, which is preferable as the flame retardant.

In the copolymer, the α-olefin is preferably an α-olefin having 5 or more carbon atoms and more preferably an α-olefin having 10 or more and 80 or less carbon atoms. An α-olefin of 5 or more carbon atoms tends to result in more favorable miscibility with the thermoplastic resin, whereas an α-olefin having 80 or less carbon atoms is advantageous in terms of raw material cost. The number of carbon atoms of the α-olefin is more preferably 12 or more and 70 or less and particularly preferably 18 or more and 60 or less.

In the copolymer, examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, 5-norbornene-2,3-dicarboxylic acid, and an ester, anhydride, or imide of such unsaturated carboxylic acids. The term "(meth)acrylic acid" indicates acrylic acid or methacrylic acid.

Specific examples of the ester, anhydride, or imide of an unsaturated carboxylic acid include (meth)acrylic esters such as methyl (meth)acrylate, ethyl (meth)acrylate, butyl (meth)acrylate, 2-ethylhexyl (meth)acrylate, and glycidyl (meth)acrylate; dicarboxylic anhydrides such as maleic anhydride, itaconic anhydride, citraconic anhydride, and 5-norbornene-2,3-dicarboxylic anhydride; and maleimide compounds such as maleimide, N-ethylmaleimide, and N-phenylmaleimide. One of these may be used alone or two or more thereof may be used in combination.

Among the compounds described above, esters and dicarboxylic anhydrides are preferred from the viewpoint of copolymerization reactivity. Among these, dicarboxylic anhydrides are preferred, and maleic anhydride is particularly preferred, from the viewpoint of miscibility with a phosphorus-based flame retardant suitable as the flame retardant.

The weight-average molecular weight of the copolymer is preferably 2000 or more and more preferably 3000 or more, whereas it is preferably 50000 or less and more preferably 30000 or less. Within the range of the weight-average molecular weight of the copolymer, better dispersibility of the flame retardant is achieved.

The weight-average molecular weight of the copolymer is a value in terms of standard polystyrene as measured by dissolving the copolymer in tetrahydrofuran (THF) and subjecting the solution to gel permeation chromatography.

Examples of commercially available products of the copolymer include Licolub CE2 (available from Clariant Japan K. K.) and DIACARNA 30M (available from Mitsubishi Chemical Corporation).

When the structural body contains the flame retardant and the dispersant, the content of the dispersant relative to 100 parts by mass of the flame retardant in the structural body is in the range of more than 0 and 25 parts by mass or less and preferably in the range from 0.01 to 10 parts by mass.

The structural body including the thermoplastic resin may be formed of a resin fiber composite material (fiber reinforced material) in which fibers are mixed with the thermoplastic resin, and for example, a resin composition in which fibers such as glass fibers or carbon fibers are contained in the thermoplastic resin may be used, or fibers such as glass fibers or carbon fibers may be impregnated with the thermoplastic resin.

The fiber preferably contains an inorganic fiber. As the inorganic fibers, various fibers can be used, and examples thereof include a glass fiber, rock wool, metal oxide fibers such as an alumina fiber and a silica-alumina fiber, a potassium titanate fiber, a calcium silicate (wollastonite) fiber, a ceramic fiber such as a ceramic fiber, a carbon fiber, and a metallic fiber. One of these inorganic fibers may be used alone or two or more thereof may be used in combination.

Among the inorganic fibers, glass fibers are preferably contained from the viewpoint of flame blocking properties and processability. That is, it is preferable that the fiber contains a glass fiber.

When the structural body contains the fiber, the content of the fiber in the structural body is not particularly limited, but is preferably from 1 to 80 mass%. Containing 1 mass% or more of the fiber can suppress deterioration of strength, rigidity and impact resistance, and containing 80 mass% or less thereof facilitates manufacturing and processing and also results in a weight reduction effect as a metal substitute. From the above-described viewpoints, the content of the fibers is more preferably from 3 to 60 mass%, still more preferably from 10 to 50 mass%, and particularly preferably from 30 to 45 mass%.

The resin fiber composite material is preferably a stampable sheet, and more preferably a stampable sheet manufactured by impregnating a mat composed of fibers with the thermoplastic resin.

When the structural body contains the flame retardant and the dispersant, it is preferable to manufacture a stampable sheet by impregnating a mat composed of fibers with a resin composition including the thermoplastic resin, the flame retardant, the dispersant, an optional additive, and the like, excluding the fibers.

A publicly known method can be used as the method for manufacturing the resin composition, and the resin composition can be manufactured by compounding, mixing, and melt-kneading the components described above. The mixing is performed using a mixer such as a tumbler, a V blender, or a ribbon blender, and the melt-kneading is performed using a single-screw extruder, a twin-screw extruder, a Banbury mixer, a roller mixer, a Brabender plastograph, or a kneader, and the resin composition is then melt-kneaded followed by its granulation.

Also, examples of the impregnation method include a method for coating a mat composed of fibers with the thermoplastic resin or a resin composition, and a method for fabricating a sheet of the thermoplastic resin or a resin composition, layering the sheet on a mat composed of fibers, and heating and melting the sheet to impregnate the mat with the sheet, and the latter method is preferable from the viewpoint of surface smoothness. More specifically, the method disclosed in WO 2022/220303 can be used.

The structural body may be in the shape of a sheet or plate or may be in the shape of a case. Also, the structural body may be flat or may be partially or entirely formed into a three dimensional shape by hot press molding or the like. Among these, the structural body preferably has a three dimensional shape.

In a case where the structural body is in the shape of a case, the structural body may be manufactured by, for example, forming the stampable sheet into the shape of a case. Various methods can be used, but press molding is preferred from the viewpoint of productivity. During press molding, for example, it is preferable to fabricate a stampable sheet, a plurality of which are layered and press-molded.

### Thermoplastic Elastomer Layer

The present molded body includes the thermoplastic elastomer layer. A material for forming the thermoplastic elastomer layer may be rubber alone or a composition including rubber and a thermoplastic resin, and is preferably a composition including rubber and a thermoplastic resin. Among these, from the viewpoint of recycling, a material including either or both of olefinic rubber and the polyolefin-based resin is preferable.

The thermoplastic elastomer layer formed of an elastomer including either or both of olefinic rubber and the polyolefin-based resin, which are excellent in recyclability, is melted and reformed by being reheated after use and can undergo material recycling into a new product such as a recycled molded article.

The olefinic rubber is preferably a copolymer including at least two or more α-olefin units. Examples of the α-olefin include ethylene, propylene, 1-butene, 2-methylpropylene, 1-pentene, 3-methyl-1-butene, 1-hexene, 4-methyl-1-pentene, and 1-octene. From the viewpoint of material recycling, it is preferable that ethylene having two carbon atoms and propylene having three carbon atoms are contained. Only one α-olefin may be copolymerized with ethylene, or two or more α-olefins may be copolymerized with ethylene. In addition, one type of olefinic rubber may be used alone or two or more thereof may be in combination.

The olefinic rubber may have another monomer unit such as a monomer unit based on a non-conjugated diene (non-conjugated diene unit) in addition to an ethylene unit and an α-olefin unit having from 3 to 8 carbon atoms. Examples of the non-conjugated diene include chain non-conjugated dienes such as 1, 4-hexadiene, 1,6-octadiene, 2-methyl-1,5-hexadiene, 6-methyl-1,5-heptadiene, and 7-methyl-1,6-octadiene; and cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, and 6-chloromethyl-5-isopropenyl-2-norbornene. Among these, 5-ethylidene-2-norbornene and dicyclopentadiene are preferable. Furthermore, an ethylene-propylene copolymer, an ethylene-propylene-diene copolymer, and an ethylene-butene copolymer may be partially or completely crosslinked. Among these, from the viewpoint of moldability and rubber elasticity, it is preferable that they are partially crosslinked.

A known polymerization method using a known catalyst for olefin polymerization may be used as the method for manufacturing the olefinic rubber. For example, the catalyst for olefin polymerization, which is a Ziegler-Natta-based catalyst, or complex-based catalysts such as a metallocene-based complex and a non-metallocene-based complex, can be used, and examples of the polymerization method include a slurry polymerization method, a solution polymerization method, a bulk polymerization method, and a gas phase polymerization method. In addition, commercially available products corresponding thereto may be used. Examples of the commercially available products corresponding thereto include Engage (trade name) series available from The Dow Chemical Company, and TAFMER (trade name) series available from Mitsui Chemicals, Inc.

The polyolefin-based resin is preferably a crystalline polyolefin from the viewpoint of light weight, stable rubber elasticity, excellent mechanical properties, and favorable moldability.

The crystalline polyolefin may be an unmodified crystalline polyolefin or may be a modified crystalline polyolefin obtained by modifying a crystalline polyolefin with at least one functional group selected from the group consisting of an acid anhydride group, a carboxyl group, an amino group, an imino group, an alkoxysilyl group, a silanol group, a silyl ether group, a hydroxyl group, and an epoxy group.

Examples of the crystalline polyolefin include a propylene-based polymer and an ethylenic polymer. One of these compounds may be used alone or two or more thereof may be used in combination.

Examples of the propylene-based polymer include a propylene homopolymer, and a propylene-based copolymer which is a random or block copolymer of polypropylene with ethylene or an α-olefin such as 1-butene or 1-hexene.

The melt flow rate (JIS K 7210, 230°C, a load of 21.2 N) of the propylene-based polymer is not particularly limited, but is usually 0.05 to 200 g/10 minutes, preferably 0.05 to 100 g/10 minutes, and more preferably 0.1 to 80 g/10 minutes. The melt flow rate within the above-described range can achieve excellent moldability, favorable appearance of the thermoplastic elastomer layer to be obtained, and controlled mechanical properties within a desired range.

A commercially available product corresponding to the propylene-based polymer can also be used. Commercially available polypropylene is available from the following manufacturers and the like and can be appropriately selected.

Examples of the commercially available products include NOVATEC (trade name) PP from Japan Polypropylene Corporation, Prime Polypro (trade name) from Prime Polymer Co., Ltd., Sumitomo NOBLEN (trade name) from Sumitomo Chemical Co., Ltd., a polypropylene block copolymer from SunAllomer Ltd., Moplen (trade name) and Circluen from LyondellBasell Industries Inc., ExxonMobil PP from ExxonMobil Corporation, Formolene (trade name) from Formosa Plastics Corporation, Borealis PP from Borealis GmbH, SEETEC PP from LG Chem Ltd., ASI POLYPROPYLENE from A. Schulman, Inc., INEOS PP from INEOS Olefins & Polymers USA, LLC, Braskem PP from Braskem S. A., Sumsung Total from Samsung Total Petrochemicals Co., Ltd., Sabic (trade name) PP from SABIC (Saudi Basic Industries Corporation), TOTAL PETROCHEMICALS Polypropylene from Total Petrochemicals USA Inc., and YUPLENE (trade name) from SK Inc.

Examples of the ethylenic polymer include high-density polyethylene, low-density polyethylene, and linear low-density polyethylene.

The ethylenic polymer preferably has a density of 0.910 g/cm³ or more and 1.00 g/cm³ or less as measured in accordance with JIS K 7112 from the viewpoint of achieving both mechanical properties and rubber elasticity.

The melt flow rate (JIS K 7210, 190°C, a load of 21.2 N) of the ethylenic polymer is not particularly limited, but is usually 0.05 to 200 g/10 minutes, preferably 0.05 to 100 g/10 minutes, and more preferably 0.1 to 80 g /10 minutes. The melt flow rate within the above-described range can achieve excellent moldability, favorable appearance of the thermoplastic elastomer layer to be obtained, and controlled mechanical properties within a desired range.

The molecular weights of the propylene-based polymer and the ethylenic polymer are not particularly limited, but they preferably contain a resin having a weight-average molecular weight from 500 to 1500000 as measured by gel permeation chromatography (GPC). The weight-average molecular weight is more preferably 1000 to 1000000 and still more preferably 2000 to 500000.

It is to be noted that the weight-average molecular weight is determined using standard polystyrene as a molecular weight standard substance.

As described above, the thermoplastic elastomer layer is preferably formed of the material including either or both of olefinic rubber and the polyolefin-based resin, more preferably formed of a material including at least the polyolefin-based resin, and still more preferably formed of a composition including olefinic rubber and the polyolefin-based resin or a composition including a rubber component other than olefinic rubber and the polyolefin-based resin. When the thermoplastic elastomer layer is formed of a composition including the rubber component other than olefinic rubber and the polyolefin-based resin, a composition containing the polyolefin-based resin and styrene-based copolymer rubber as the rubber component other than olefinic rubber, is preferable.

The composition including the rubber and the thermoplastic resin may include a hydrocarbon-based softening agent for rubber from the viewpoint of improving the processability and flowability of the composition.

Examples of the hydrocarbon-based softening agent for rubber include a mineral oil-based softening agent and a synthetic resin-based softening agent with the mineral oil-based softening agent being particularly preferred. The mineral oil-based softening agent is generally a mixture of an aromatic hydrocarbon, a naphthenic hydrocarbon, and a paraffinic hydrocarbon, and a softening agent in which 50% or more of the total carbon atoms is a paraffinic hydrocarbon is referred to as a paraffinic oil, a softening agent in which from 30 to 45% of the total carbon atoms is a naphthenic hydrocarbon is referred to as a naphthenic oil, and a softening agent in which 35% or more of the total carbon atoms is an aromatic hydrocarbon is referred to as an aromatic oil. Among these, a paraffinic oil is preferable.

The kinematic viscosity of the hydrocarbon-based softening agent for rubber at 40°C is preferably 20 centistokes (cSt) or more and more preferably 50 cSt or more. The kinematic viscosity is, on the other hand, preferably 800 cSt or less and more preferably 600 cSt or less. The flash point (COC method) of the hydrocarbon-based softening agent for rubber is preferably 200°C or higher and more preferably 250°C or higher.

A commercially available product may be used as the hydrocarbon-based softening agent for rubber. Examples of the commercially available products include "Nisseki Polybutene (trade name) HV" series available from ENEOS Corporation, "Diana (trade name) Process Oil PW" series available from Idemitsu Kosan Co., Ltd., and "VIVA-B-FIX" (trade name) series available from H&R Co., Ltd.

One hydrocarbon-based softening agent for rubber can be used alone or two or more thereof can be used in any combination and at any proportion.

A commercially available product can be used as the composition including olefinic rubber and a polyolefin-based resin. Examples thereof include Milastomer (trade name) available from Mitsui Chemicals, Inc., ESPOLEX (trade name) TPE Series available from SUMITOMO CHEMICAL CO., LTD., Thermolane (trade name) available from Mitsubishi Chemical Corporation, Trexprene (trade name) available from Mitsubishi Chemical Corporation, Tefabloc (trade name) TPO available from Mitsubishi Chemical Corporation, Santoprene (trade name) available from Celanese Corporation, Sarlink (trade name) available from TOYOBO MC Corporation, and DAWNPRENE (trade name) available from Shandong Dawn Polymer Co., Ltd.

The composition including styrene-based copolymer rubber and a polyolefin-based resin, which is a commercially available product can also be used. Examples thereof include Tefabloc (trade name) TPS available from Mitsubishi Chemical Corporation, Rheostmer (trade name) available from RIKEN TECHNOS CORPORATION, Elastomer AR (trade name) available from Aron Kasei Co., Ltd., Alostomer (trade name) available from Aron Kasei Co., Ltd., Ahneston (trade name) available from Kuraray Plastics Co., Ltd., and THERMOLAST (trade name) manufactured KRAIBURG TPE GMBH & CO. KG.

The thermoplastic elastomer layer may be imparted with flame retardancy in order to suppress rupture at the time of thermal runaway. For example, as the material for forming the thermoplastic elastomer layer, a composition that contains rubber alone and/or a composition including rubber and a thermoplastic resin and that also contains a flame retardant may be used. The flame retardant which is exemplified as a flame retardant that may be contained in the structural body including the thermoplastic resin can be preferably used. In order to enhance the dispersibility of the flame retardant in the rubber alone and/or the composition including rubber and a thermoplastic resin, in the material for forming the thermoplastic elastomer layer, a dispersant may be contained. The dispersant which is exemplified as a dispersant that may be contained in the structural body including the thermoplastic resin can be preferably used.

In a case where the material for forming the thermoplastic elastomer layer contains the flame retardant or the dispersant, the proportion of the rubber alone and/or the composition including rubber and a thermoplastic resin relative to the total mass of the material for forming the thermoplastic elastomer layer is preferably 20 mass% or more, more preferably 30 mass% or more, still more preferably 40 mass% or more, even still more preferably 45 mass% or more, and particularly preferably 50 mass% or more, whereas, the proportion is preferably 80 mass% or less, more preferably 70 mass% or less, and still more preferably less than 60 mass%. The proportion of the rubber alone and/or the composition including rubber and a thermoplastic resin equal to or more than the above-described lower limit value described above increases the likelihood of exhibiting the physical properties inherent in the rubber alone or the composition including rubber and a thermoplastic resin, and the proportion equal to or less than the above-described upper limit value renders superior flame retardancy.

The proportion of the flame retardant relative to the total mass of the material for forming the thermoplastic elastomer layer is preferably 35 mass% or more, more preferably 38 mass% or more, still more preferably 40 mass% or more, and on the other hand, it is preferably 50 mass% or less, more preferably 48 mass% or less, and still more preferably 45 mass% or less. The proportion of the flame retardant equal to or more than the above-described lower limit value renders superior flame retardancy, and the proportion equal to or less than the above-described upper limit value facilitates exhibition of the physical properties (for example, high mechanical properties and flexibility) inherent in the rubber alone or the composition including rubber and a thermoplastic resin.

The proportion of the dispersant relative to the total mass of the material for forming the thermoplastic elastomer layer is preferably 0.01 mass% or more, more preferably 0.03 mass% or more, still more preferably 0.1 mass% or more, even still more preferably 0.5 mass% or more, and particularly preferably 1 mass% or more, and on the other hand, it is preferably 10 mass% or less, more preferably 5 mass% or less, and still more preferably 3 mass% or less. The proportion of the dispersant equal to or more than the above-described lower limit value allows favorable dispersion of the flame retardant, resulting in not only favorable flame retardancy and high degree of flexibility and mechanical properties of the material for forming the thermoplastic elastomer layer but also the favorable appearance of the thermoplastic elastomer layer to be obtained. The proportion of the dispersant equal to or less than the above-described upper limit value inhibits the material for forming the thermoplastic elastomer layer from being affected on its flame retardancy due to the dispersant.

In addition, the thermoplastic elastomer layer may be imparted with conductivity in order to shield electromagnetic waves. For example, as the material for forming the thermoplastic elastomer layer, a composition that contains rubber alone and/or a composition including rubber and a thermoplastic resin and that also contains a conductive agent may be used, and the material for forming the thermoplastic elastomer layer and a composition including the conductive agent may be subjected to two-color molding. A publicly known conductive agent may be used as the conductive agent.

An optional method is used in order to manufacture the material forming the thermoplastic elastomer layer. Examples thereof include a method involving sufficient mixing using a preliminary mixing means such as a V-type blender, a Henschel mixer, a mechanochemical apparatus, or an extrusion mixer, optionally granulation by an extrusion granulator, a briquetting machine, or the like, and then melt-kneading by a melt-kneader, followed by extrusion. Examples of the melt-kneader include a twin-screw extruder such as a vent-type twin-screw extruder, a Banbury mixer, a kneading roll, a single-screw extruder, and a multi-screw extruder having three or more screws. A temperature during melt-kneading is, for example, 170°C or higher and 260°C or lower.

The material for forming the thermoplastic elastomer layer extruded as described above is directly cut and pelletized by equipment such as a pelletizer, or cooled to form a strand, which is then cut and pelletized by equipment such as a pelletizer.

The thermoplastic elastomer layer is obtained by molding the material for forming the thermoplastic elastomer layer. The molding method is three dimensional additive manufacturing. The three dimensional additive manufacturing method is shaping by a 3D printer. That is, the thermoplastic elastomer layer is layered onto a structural body using a 3D printer.

A printer of a material extrusion method (MEX method) is preferably used as the 3D printer. The material for forming the thermoplastic elastomer layer can be supplied to the 3D printer in the shape of pellet, powder, granule, filament, or the like, and it is desirable to mold the material using a 3D printer of a type that can use a shaping material in the shape of pellet or granule. An example of such a printer includes a printer in which an extrusion nozzle is controllably driven by a gantry system, or by a robot arm system. The temperature at which the material for forming the thermoplastic elastomer layer is molded, that is, the temperature at which the thermoplastic elastomer layer is layered is preferably from 170 to 260°C.

The present molded body is a molded body in which the thermoplastic elastomer layer is layered on the above-described structural body by thermal fusion. Examples of a method for manufacturing such a molded body include a method for molding the thermoplastic elastomer layer alone by three dimensional additive manufacturing method and then integrating the molded layer with a structural body, and a method for directly layering the thermoplastic elastomer layer on the structural body. Adopting such a method has an advantage that an adhesive layer is not required to be disposed, as a result of which a molded body having high adhesive strength and excellent sealing properties is obtained.

Also, the thermoplastic elastomer layer is preferably directly layered on the structural body. Adopting such a method also makes it possible to integrally mold the structural body and the thermoplastic elastomer layer to obtain a molded body. In this case, for the purpose of improving the thermal fusion properties, the structural body may be heated before or during molding by a 3D printer. This heating temperature is, for example, from 40 to 160°C.

In a particularly preferred aspect of the third aspect of the present invention, a laminate is formed from a structural body including the polyolefin-based resin as the thermoplastic resin, and from a material including either or both of olefinic rubber and the polyolefin-based resin as the thermoplastic elastomer layer. That is, the thermoplastic elastomer layer and the structural body are formed of the same polyolefin-based material, which enables the used thermoplastic elastomer layer and structural body to be recycled as a material together.

In another preferred aspect, a thermoplastic elastomer layer is formed from a material including an acid-modified polyolefin-based thermoplastic elastomer, and formed of a structural body including a polyamide resin as the thermoplastic resin.

In the present molded body, the thermoplastic elastomer layer preferably occupies 90% or less of a surface area of the structural body. Since the thermoplastic elastomer layer is bonded so as to occupy 90% or less of the surface area of the structural body, a minimum material necessary for exhibiting the effect of sealing properties will be used, thereby providing effects such as weight reduction and cost reduction. On the other hand, the thermoplastic elastomer layer, when bonded so as to occupy 0.1% or more of the surface area of the structural body, can exhibit sufficient sealing properties. From such a viewpoint, the thermoplastic elastomer layer preferably occupies 80% or less, more preferably 70% or less, more preferably 0.3% or more, and still more preferably 0.5% or more, of the surface area of the structural body.

A thickness of the thermoplastic elastomer layer is preferably 10 mm or less, more preferably 8 mm or less, and still more preferably 6mm or less, from the viewpoint of weight reduction and cost reduction. On the other hand, a thickness of the thermoplastic elastomer layer is preferably 1 mm or more, more preferably 1.5 mm or more, from the viewpoint of exhibiting sufficient sealing properties.

The difference between the maximum thickness and the minimum thickness of the thermoplastic elastomer layer is 1.5 mm or less. When the difference between the maximum thickness and the minimum thickness is 1.5 mm or less, the thickness deviation is small, and therefore the thermoplastic elastomer layer is not uneven, and the thermoplastic elastomer layer does not float from the structural body, and the sealing properties are excellent. In addition, even when another material is bonded to the surface of the thermoplastic elastomer layer opposite to the structural body, the thermoplastic elastomer layer is not uneven and has excellent sealing properties. The smaller the difference between the maximum thickness and the minimum thickness, the more favorable, and the lower limit value is 0. From this viewpoint, the difference between the maximum thickness and the minimum thickness is preferably 1.3 mm or less and more preferably 1.0 mm or less. An example of a method for reducing the difference includes a method for optimizing a shaped shape, a shaping path, an ejection amount, an ejection width, and the like at the time of molding by a 3D printer. For example, when the shaping path has a shape that is bent at a right angle or an acute angle, the resin is retained at a bent portion, and a material (elastomer) for forming the thermoplastic elastomer layer is likely to be uneven. In addition, in a case where the paths are overlapped at the start point and the end point of the shaping path, unevenness is likely to occur at the overlapping portion, and thus it is preferable to adjust an ejection amount, an ejection width, and the like. In this case, it is preferable to adjust the ejection amount, ejection width, and the like within a range in which the size of the unevenness does not affect the sealing properties so that a gap is not generated between the passes at a portion where the passes are overlapped.

It is to be noted that the maximum thickness and the minimum thickness of the thermoplastic elastomer layer as used herein refer to the maximum thickness and the minimum thickness of the thermoplastic elastomer layer disposed in a frame shape so as to surround a periphery of an accommodation portion in a battery pack described later. In this case, the thermoplastic elastomer layer may be formed in one layer when layered by the 3D printer or may be layered in two or more layers.

### Battery Pack

The battery pack according to the third aspect of the present invention (hereinafter, also referred to as "the present battery pack") uses the present molded body. The present molded body in the present battery pack corresponds to the thermoplastic elastomer layer 61 and the upper case 22, and/or the thermoplastic elastomer layer 61 and the lower case 42 described later. That is, the thermoplastic elastomer layer in the present molded body corresponds to the thermoplastic elastomer layer 61, and the structural body including the thermoplastic resin corresponds to the upper case 22 and/or the lower case 42. Also, a layered portion of the thermoplastic elastomer layer and the structural body corresponds to the thermoplastic elastomer layer 61 and the upper flange 24 and/or the thermoplastic elastomer layer 61 and the lower flange 44.

Hereinafter, an electric vehicle in which an embodiment of the battery pack according to the third aspect of the present invention is used will be described with reference to FIG. 1.

As shown in FIG. 1, this electric vehicle 1 includes the chassis 10, tires 15, and the battery pack 20 of the present embodiment.

For example, the chassis 10 of the present embodiment constitutes a part of the framework of the electric vehicle 1. The chassis 10 extends along a horizontal plane. The phrase "A is along B" means that an angle formed by the A and the B is 30 degrees or less. This angle formed is more preferably 15 degrees or less. For example, the A corresponds to the chassis 10, and the B corresponds to a horizontal plane.

The chassis 10 supports a motor (not shown).

An opening portion 10a penetrated in its vertical direction is formed in the chassis 10. A plurality of through holes (reference signs omitted) penetrated in the vertical direction are formed in a peripheral edge portion of the opening portion 10a in the chassis 10.

The battery pack 20 is supported by the chassis 10. The battery pack 20 stores electric power. The battery pack 20 supplies stored electric power to a motor based on an instruction of an operator of the electric vehicle 1. The battery pack 20 will be described in detail later.

The tire 15 is rotatably supported by the chassis 10 via a suspension (not shown). The motor rotates the tire 15 in a predetermined direction.

As shown in FIG. 1, the battery pack 20 includes the case 21, the power storage unit 51, and the fixing portion 56. The case 21 has the upper case 22 and the lower case 42.

The upper case 22 has the upper case main body 23 and the upper flange 24.

The upper case main body 23 is formed in a topped cylindrical shape. That is, the upper case main body 23 has the upper sidewall 32 and the top wall 33. Thus, the power storage unit 51 can be accommodated in a part of the accommodation space S1 formed in the upper sidewall 32.

The upper sidewall 32 is formed in a rectangular cylindrical shape (cylindrical shape) exhibiting a rectangular edge shape when viewed in its vertical direction. Hereinafter, a direction along one outer edge (short side) of the upper sidewall 32 when viewed in the vertical direction is referred to as a first direction X. The first direction X is a direction along a horizontal plane. Hereinafter, a direction orthogonal to the vertical direction and orthogonal to the first direction X is referred to as a second direction Y.

The shape of the upper sidewall 32 is not limited thereto and may be formed in a cylindrical shape or the like exhibiting a triangular or pentagonal edge shape or a polygonal edge shape having more than five angles, or a circular edge shape when viewed in the vertical direction.

The top wall 33 clogs an opening formed in an upper end portion of the upper sidewall 32. Hereinafter, the central axis of the top wall 33 is referred to as the axis O1. For example, the axis O1 is an axis that passes through the center of gravity of the top wall 33 and extends along the vertical direction.

The upper flange 24 protrudes from the outer peripheral edge of the lower end portion of the upper sidewall 32 of the upper case main body 23 toward the outside of the upper sidewall 32 along the horizontal plane. The term "outside" as used herein means a direction away from the axis O1.

The upper flange 24 protrudes over the entire circumference of the upper sidewall 32. Incidentally, the upper flange 24 may protrude only from a part of the upper sidewall 32 in the circumferential direction (a part around the axis O1).

The upper flange 24 has a plurality of through holes (reference signs omitted) penetrated in the vertical direction. The plurality of through holes are disposed with a space from each other around the upper sidewall 32.

The upper case main body 23 and the upper flange 24 of the upper case 22 are integrally formed of a resin material.

As shown in FIG. 1, the lower case 42 has the lower case main body 43 and the lower flange 44.

The lower case main body 43 is formed in a bottomed cylindrical shape. That is, the lower case main body 43 has the lower sidewall 47 and the bottom wall 48.

Similarly to the upper sidewall 32, the lower sidewall 47 is formed in a rectangular cylindrical shape having a rectangular edge shape when viewed in the vertical direction. The bottom wall 48 clogs an opening formed in a lower end portion of the lower sidewall 47.

The lower flange 44 protrudes outward from the outer peripheral edge of the lower sidewall 47 of the lower case main body 43 along the horizontal plane. The lower flange 44 is disposed to face the upper flange 24 from below the upper flange 24. The phrase "A faces B" means that A and B face each other with a space therebetween.

The lower flange 44 has a plurality of through holes (reference signs omitted) penetrated in the vertical direction. The plurality of through holes are arranged with a space from each other around the lower sidewall 47.

The lower case 42 (including the lower case main body 43 and the lower flange 44) may be integrally formed of the same material as the resin material for forming the upper case 22, or may be formed of iron, aluminum, or the like.

The thermoplastic elastomer layer 61 is formed of the material for forming the thermoplastic elastomer layer, and is formed between the upper flange 24 and the lower flange 44. That is, the thermoplastic elastomer layer 61 is provided between the upper flange 24 and the lower flange 44.

An adhesive layer or the like may be provided between the thermoplastic elastomer layer 61 and the upper flange 24 or between the thermoplastic elastomer layer 61 and the lower flange 44, but the thermoplastic elastomer layer 61 is in direct contact with at least one of the upper flange 24 and the lower flange 44 from the viewpoint of waterproofing and dustproofing properties and the viewpoint of suppressing an increase in the number of components. The thermoplastic elastomer layer 61 may be in contact with the through hole or may be disposed at a position away from the through hole. In addition, the thermoplastic elastomer layer 61 may be provided only on the power storage unit side of the through hole.

The thermoplastic elastomer layer also functions as a sealing material for the purpose of waterproofing and dustproofing, and is therefore provided in a frame shape so as to surround a periphery of the accommodation portion so that water and dust do not enter the accommodation space S1. For example, as shown in FIG. 3, the thermoplastic elastomer layer is installed on the lower flange. Although not shown, the same can be applied to the upper flange. In this case, the maximum thickness and the minimum thickness of the thermoplastic elastomer layer described above refer to the maximum thickness and the minimum thickness of the thermoplastic elastomer layer disposed in a frame shape so as to surround a periphery of the accommodation portion. For example, in a portion having a shape that protrudes outward or inward from the periphery of the accommodation portion as in the portion A in FIG. 3, it is considered that the sealing properties are not affected even if the thickness is extremely small. The "maximum thickness and minimum thickness of the thermoplastic elastomer layer" referred to in the present patent do not cover the thickness of the portion having a shape protruding outward or inward from the peripheral portion of the accommodation portion, such as the portion A.

The power storage unit 51 is a known secondary battery. The power storage unit 51 stores a predetermined amount of power and supplies the power to an outside. For example, the power storage unit 51 is a lithium ion battery.

The power storage unit 51 is disposed in an accommodation space S1 formed of the upper case main body 23 and the lower case main body 43.

By disposing the upper flange 24 and the lower flange 44 so as to face each other, the power storage unit 51 is held in the accommodation space S1 formed between the upper case main body 23 and the lower case main body 43.

For example, the fixing portion 56 includes a plurality of the bolts 57 and a plurality of the nuts 58.

A head of the bolt 57 is in contact with the upper flange 24 of the upper case 22 from above the upper flange 24. A shaft portion of the bolt 57 is inserted through a through hole of the upper case 22, a through hole of the lower case 42, and a through hole of the chassis 10.

The nut 58 is in contact with the lower flange 44 of the lower case 42 from below the lower flange 44. The nut 58 is fitted to the shaft portion of the bolt 57. The head of the bolt 57 and the nut 58 sandwich the upper flange 24, the lower flange 44, and the chassis 10 in the vertical direction.

The battery pack 20 may have various configurations as described below.

In the battery pack of the first modification, in each configuration of the battery pack 20 of the present embodiment, the upper case body 23 and the upper flange 24 of the upper case 22 are formed of iron, aluminum, or the like instead of the resin material, and the lower case main body 43 and the lower flange 44 of the lower case 42 are formed of the resin material instead of iron, aluminum, or the like.

### Examples

Hereinafter, the first to third aspects of the present invention will be described in detail by way of Examples (Experimental Examples), provided that the present invention (the first to third aspects) is in no way limited to the following Examples (Experimental Examples). In the following Examples (Experimental Examples) and the like, the sign % is based on a mass unless otherwise specified. The following items were evaluated.

### 1. Measurement of Adhesive Strength

A plate (structural body) including the synthetic resin (thermoplastic resin) was cut into 10 cm × 20 cm, its surface was covered with a polyimide (PI) sheet, and then the PI sheet was only partially removed so as to form a strip shape having a 1.25 cm length in the longitudinal direction, allowing a surface of the plate (structural body) to be exposed. On this plate (structural body), only one layer of the material for forming the thermoplastic elastomer layer was layered in a rectangular shape of 3 mm in thickness and 10 mm in width by a 3D printer according to the method described in Experimental Example (Example). In this case, the material was layered on the plate so that the contact area between the exposed portion of a surface of the plate (the structural body) and the material for forming the thermoplastic elastomer layer was approximately 125 mm². Thereafter, an upper surface of the thermoplastic elastomer layer (the surface opposite to the plate (structural body) including the synthetic resin (thermoplastic resin)) was lined with an aluminum plate having a thickness of 0.8 mm to prepare a sample for measuring tensile shear adhesive strength between the plate (structural body) including the synthetic resin (thermoplastic resin) and the thermoplastic elastomer layer. The sample was subjected to a shear peel test at a test speed of 5 mm/min in accordance with JIS K 6850, and adhesive strength between the plate (structural body) including the synthetic resin (thermoplastic resin) and the thermoplastic elastomer layer was evaluated.

### 2. Measurement of Thickness of Thermoplastic Elastomer Layer

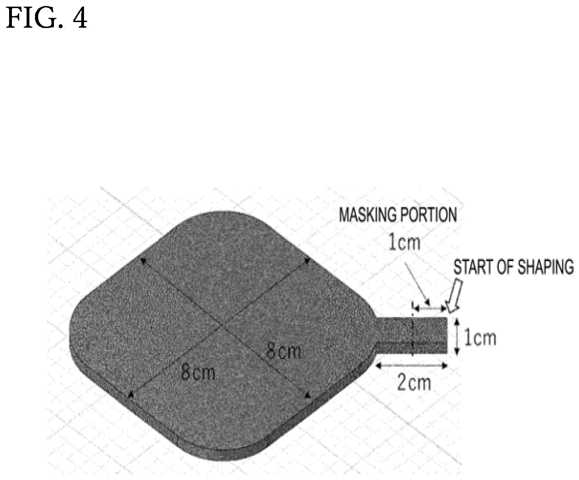

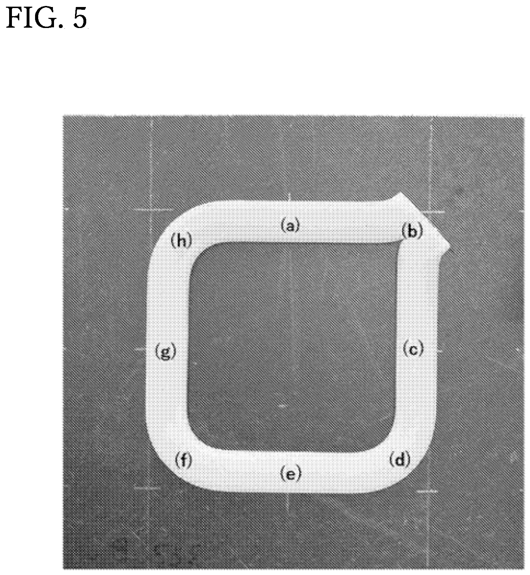

Only one layer having the shape shown in FIG. 4 (thickness 3 mm, curvature radius of the corner portion 20 mm) was formed on a plate (structural body) having a 15 cm square and including the synthetic resin (thermoplastic resin) in a spiral mode by a 3D printer by the method described in Experimental Example (Example). In this case, the shaping was started from a shaping start portion illustrated in FIG. 4. In addition, in the range from the shaping start portion to a portion 1 cm away from the shaping portion (the range of the masking portion illustrated in FIG. 4), a packing PP tape was attached in advance as masking on the plate (structural body), and the masking portion was removed together with the thermoplastic elastomer layer after shaping. As shown in FIG. 5, using the obtained sample for measuring a thermoplastic elastomer layer thickness, for the frame-shaped portion of the thermoplastic elastomer layer, the total thickness including the thermoplastic elastomer layer was measured with a constant pressure thickness measuring device at points (a) to (h) shown in FIG. 5, and the thickness of the plate (structural body) including the synthetic resin (thermoplastic resin) was subtracted therefrom to obtain a thickness of the thermoplastic elastomer layer at each point.

### 3. Evaluation of Sealing Properties

A plate (structural body) having a 15 cm square and including the synthetic resin (thermoplastic resin) was overlapped on a surface of the thermoplastic elastomer layer of the sample for measuring a thermoplastic elastomer layer thickness, and a gap between the plate (structural body) and the thermoplastic elastomer layer was visually confirmed while lightly pressing the plate with a hand, and the sealing properties was evaluated as follows.
Sealing properties are OK: No gap can be visually confirmed.
Sealing properties are NG: A gap can be visually confirmed.

### Material for Forming Thermoplastic Elastomer Layer

### Composition (a-1) Including Olefinic Rubber and Polyolefin-Based Resin

A composition including olefinic rubber and the polyolefin-based resin, which was Trexprene (trade name) 3555B available from Mitsubishi Chemical Corporation was used. Composition (a-2) Including Styrene-Based Copolymer Rubber and Polyolefin-Based Resin

A composition including styrene-based copolymer rubber and the polyolefin-based resin, which was Tefabloc (trade name) SJ4300C available from Mitsubishi Chemical Corporation was used.

### Composition (a-3) Including Styrene-Based Copolymer Rubber and Polyolefin-Based Resin

A composition including styrene-based copolymer rubber and the polyolefin-based resin, which was Tefabloc (trade name) TOSI212 40A available from Mitsubishi Chemical Corporation was used.

### Flame Retardant (a-4)

The flame retardant used was a phosphorus-based flame retardant composition (ADK STAB FP-2500S available from ADEKA Corporation, an intumescent-based flame retardant containing from 50 to 60 mass% of piperazine pyrophosphate, from 35 to 45 mass% of melamine pyrophosphate, and from 3 to 6 mass% of zinc oxide, relative to the total mass of the phosphorus-based flame retardant composition), was used.

### Dispersant (a-5)

The dispersant used was an α-olefin-maleic anhydride copolymer (DIACARNA 30M, available from Mitsubishi Chemical Corporation, weight-average molecular weight: 7800) was used.

### Material (A-1) for Forming Thermoplastic Elastomer Layer

In preparing the material (A-1) for forming the thermoplastic elastomer layer, 58 mass% of the component (a-1), 40 mass% of the component (a-4), and 2 mass% of the component (a-5) were blended and mixed by hand blending. Thereafter, the mixture was melt-kneaded under conditions of a screw rotation speed of 250 rpm and a cylinder temperature of 200°C using a unidirectional twin-screw extruder with φ 30 mm (model name: "BT-30", available from Plastic Engineering Laboratory Co., Ltd., L/D = 30) and then dried at 70°C for 12 hours to obtain a pellet (A-1). The term "L/D" represents the ratio between a length (L) and the diameter (D) of the screw.

### Material (A-2) for Forming Thermoplastic Elastomer Layer

A pellet (A-2) was obtained in the same manner as in the material (A-1) for forming the thermoplastic elastomer layer except that 100 mass% of the component (a-1) was used as the material (A-2) for forming the thermoplastic elastomer layer.

### Material (A-3) for Forming Thermoplastic Elastomer Layer

A pellet (A-3) was obtained in the same manner as in the material (A-1) for forming the thermoplastic elastomer layer except that 100 mass% of the component (a-2) was used as the material (A-3) for forming the thermoplastic elastomer layer.

### Material (A-4) for Forming Thermoplastic Elastomer Layer

A pellet (A-4) was obtained in the same manner as the material (A-1) for forming the thermoplastic elastomer layer except that 100 mass% of the component (a-3) was used as the material (A-4) for forming the thermoplastic elastomer layer.

### Plate (Structural Body) Including Synthetic Resin (Thermoplastic Resin)

### (Synthetic Resin (Thermoplastic Resin (b-1))

The synthetic resin (thermoplastic resin) used was a polypropylene-based resin: "Novatec PP SA06GA" (melt flow rate: 60 g/10 minutes) available from Japan Polypropylene Corporation.

### Flame retardant (b-2)

The flame retardant used was a phosphorus-based flame retardant composition (ADK STAB FP-2500S available from ADEKA Corporation, an intumescent-based flame retardant containing from 50 to 60 mass% of piperazine pyrophosphate, from 35 to 45 mass% of melamine pyrophosphate, and from 3 to 6 mass% of zinc oxide, relative to the total mass of the phosphorus-based flame retardant composition), was used.

### Dispersant (b-3)

The dispersant used was an α-olefin-maleic anhydride copolymer (DIACARNA 30M, available from Mitsubishi Chemical Corporation, weight-average molecular weight: 7800) was used.

### Fiber (b-4)

The fiber used was a glass fiber mat which was needle-punched from a swirling mat (basis weight 880 g/m²) manufactured from continuous rovings of glass fibers (fiber diameter 23 µm).

A pellet (B-1) of a resin composition was prepared by melt-kneading (230°C) 68 mass% of the component (b-1), 30 mass% of the component (b-2), and 2 mass% of the component (b-3).

The pellets (B-1) were fed in an extruder, melted, and then extrusion-molded into a sheet shape, as well as the component (b-4) was sandwiched from both sides with the extruded sheet-shaped resin compositions and layered. Next, the sheet-shaped resin composition was layered on both surfaces of the component (b-4), and the resultant was heated and pressurized at 230°C for 4 minutes while applying a pressure of 0.3 MPa using a laminator, and then cooled and solidified to obtain a plate (structural body) (stampable sheet, thickness 2.5 mm) including the synthetic resin (thermoplastic resin).

### First Aspect

### Experimental Example 1-1

The material (A-1) for forming the thermoplastic elastomer layer in the shape of pellet was charged into a 3D printer (GEM550 available from S. Lab. Co., Ltd.) and ejected onto the plate including the synthetic resin under the setting conditions of a layer pitch 3 mm, a nozzle size 6 mm, a nozzle temperature of 195°C, a shaping speed 20 mm/s, an ejection ratio of 1.0, and a table temperature of 80°C, to shape a sample for measuring tensile shear adhesive strength and a sample for measuring a thermoplastic elastomer layer thickness. It is to be noted that the surface temperature of the plate including the synthetic resin at this time was approximately 70°C as measured by a contact thermometer. In addition, the proportion of the area of the thermoplastic elastomer layer relative to the surface area of the plate including the synthetic resin in the sample for evaluating a thickness of the thermoplastic elastomer layer and sealing properties was approximately 18%. The adhesive strength, the thermoplastic elastomer layer thickness, and the sealing properties were each evaluated using these samples, and the sealing properties were each evaluated, and the results are shown in Table 1. Incidentally, in the evaluation of the adhesive strength, the peeling mode was cohesive failure of the material for forming the thermoplastic elastomer layer.

### Experimental Example 1-2

A sample for measuring tensile shear adhesive strength and a sample for measuring a thermoplastic elastomer layer thickness were respectively shaped in the same manner as in Experimental Example 1-1 except that the material for forming the thermoplastic elastomer layer was (A-2), the nozzle temperature was 220°C, and the ejection ratio was 1.04. It is to be noted that the surface temperature of the plate including the synthetic resin at this time was approximately 70°C as measured by a contact thermometer. In addition, the proportion of the area of the thermoplastic elastomer layer relative to the surface area of the plate including the synthetic resin in the sample for evaluating a thickness of the thermoplastic elastomer layer and sealing properties was approximately 18%. The adhesive strength, the thermoplastic elastomer layer thickness, and the sealing properties were each evaluated using these samples, and the results are shown in Table 1. Incidentally, in the evaluation of the adhesive strength, the peeling mode was cohesive failure of the material for forming the thermoplastic elastomer layer.

### Experimental Example 1-3

A sample for measuring tensile shear adhesive strength and a sample for measuring a thermoplastic elastomer layer thickness were respectively shaped in the same manner as in Experimental Example 1-1 except that the material for forming the thermoplastic elastomer layer was (A-3), the nozzle temperature was 220°C, and the ejection ratio was 1.04. It is to be noted that the surface temperature of the plate including the synthetic resin at this time was approximately 70°C as measured by a contact thermometer. In addition, the proportion of the area of the thermoplastic elastomer layer relative to the surface area of the plate including the synthetic resin in the sample for evaluating a thickness of the thermoplastic elastomer layer and sealing properties was approximately 18%. The adhesive strength, the thermoplastic elastomer layer thickness, and the sealing properties were each evaluated using these samples, and the results are shown in Table 1. Incidentally, in the evaluation of the adhesive strength, the peeling mode was cohesive failure of the material for forming the thermoplastic elastomer layer.

### Experimental Example 1-4

A sample for measuring tensile shear adhesive strength and a sample for measuring a thermoplastic elastomer layer thickness were respectively shaped in the same manner as in Experimental Example 1-1 except that the material for forming the thermoplastic elastomer layer was (A-4), the nozzle temperature was 220°C, and the ejection ratio was 1.04. It is to be noted that the surface temperature of the plate including the synthetic resin at this time was approximately 70°C as measured by a contact thermometer. In addition, the proportion of the area of the thermoplastic elastomer layer relative to the surface area of the plate including the synthetic resin in the sample for evaluating a thickness of the thermoplastic elastomer layer and sealing properties was approximately 18%. The adhesive strength, the thermoplastic elastomer layer thickness, and the sealing properties were each evaluated using these samples, and the results are shown in Table 1. Incidentally, in the evaluation of the adhesive strength, the peeling mode was cohesive failure of the material for forming the thermoplastic elastomer layer.

### [Table 1]

**Table 1**

| | | Experimental Example 1-1 | Experimental Example 1-2 | Experimental Example 1-3 | Experimental Example 1-4 |
|---|---|---|---|---|---|
| Material for forming thermoplastic elastomer layer | | A-1 | A-2 | A-3 | A-4 |
| Adhesive strength | | 1.0 MPa | 0.62 MPa | 0.80 MPa | 0.56 MPa |
| Thermoplastic elastomer layer thickness (mm) | (a) | 3.31 | 2.82 | 3.52 | 3.26 |
| | (b) | 3.38 | 3.12 | 3.41 | 3.14 |
| | (c) | 3.36 | 2.98 | 3.50 | 3.03 |
| | (d) | 3.27 | 2.99 | 3.55 | 2.78 |
| | (e) | 3.31 | 2.94 | 3.65 | 3.19 |
| | (f) | 3.27 | 2.96 | 3.76 | 3.15 |
| | (g) | 3.35 | 2.96 | 3.59 | 3.16 |
| | (h) | 3.31 | 2.83 | 3.71 | 3.06 |
| | Difference between maximum and minimum | 0.11 | 0.30 | 0.35 | 0.48 |
| Sealing properties | | OK | OK | OK | OK |

Experimental Examples 1-1 to 1-4 are excellent in sealing properties and excellent in adhesive strength.

Incidentally, the plate including the synthetic resin is assumed to be the upper case.

### < Evaluation of Material Recyclability >

The plate including the synthetic resin was cut into 10 cm × 10 cm, and only one layer of the material for forming the thermoplastic elastomer layer was layered on this plate by a 3D printer according to the method described in Experimental Examples (Examples). This sample was charged into a rotatory cutter (an RC250 type pulverizer available from Yoshiko, Ltd.) to prepare pulverized samples having a pulverized particle size of Φ 1 mm, respectively. The components of the pulverized sample were adjusted to have each ratio shown in Table 2 below. In this evaluation, the "plate including the synthetic resin" is the same as that used in Experimental Examples 1-1 to 1-4, and the "material for forming the thermoplastic elastomer layer" is a pellet obtained in the same manner as the material (A-1) for forming the thermoplastic elastomer layer except that 100 mass% of the components shown in Table 2 was used.

The obtained pulverized sample described above was added to the raw materials shown in Table 3, and an injection molding machine "FANUC ROBOSHOT α-S300iA" available from Fanuc Corporation was used to manufacture each of molded articles (Experimental Examples 2-1 and 2-2). In addition, a molded article (Experimental Example 2-3) was manufactured in the same manner as in Experimental Examples 2-1 and 2-2 except that the pulverized sample was not contained.

It is to be noted that the main molding conditions of the molded articles (Experimental Example 2-1 to 2-3) are as follows.
1) Temperature conditions: cylinder temperature (220°C), mold temperature (60°C)
2) Injection conditions: injection pressure (200 MPa), holding pressure (82 MPa)
3) Measurement conditions: screw rotation speed (50 rpm), back pressure (15 MPa)

### [Table 2]

**Table 2**

| Composition of synthetic resin (mass%) | Plate including synthetic resin | TEFABLOC SJ4300C | TEFABLOC TPSD203 15A |
|---|---|---|---|
| Pulverized sample 1 | 85 mass% | 15 mass% | - |
| Pulverized sample 2 | 85 mass% | - | 15 mass% |

### 4. Evaluation of Flame Retardancy UL94

The molded article (1/16-inch test bar) prepared in each Experimental Example was used to evaluate the flame retardancy by a vertical burning test in accordance with the UL94 standard.

The "total burning time" is the total flaming burning time during the burning test. The "number of drips" is the number of particles (drips) falling from the test piece during the burning test. The "rating" is a rating defined by the UL94 standard, and is determined by (1) the burning time after flame contact of each test piece, (2) the total burning time of five samples, (3) the position to which each test piece was burned, (4) ignition due to dripping, and (5) redness after the second flame contact.

### 5. Measurement of Tensile Strength

The molded article (JIS K7139 A1 or JIS K6251 1, dumbbell test piece) prepared in each Experimental Example was used to measure the maximum tensile strength (MPa) in accordance with JIS K7161-1.

### 6. Measurement of Bending Strength

The molded article (JIS K7139 A1 dumbbell test piece) prepared in each Experimental Example was cut into a length 80 mm, and the flexural modulus (MPa) and the maximum bending strength (MPa) were measured in accordance with JIS K7171.

The evaluation results of the molded articles (Experimental Examples 2-1 to 2-3) obtained above are shown in Table 3.

### [Table 3]

**Table 3**

| | | | Experimental Example 2-1 | Experimental Example 2-2 | Experimental Example 2-3 |
|---|---|---|---|---|---|
| | Pulverized sample 1 | | 5 | 0 | 0 |
| | Pulverized sample 2 | | 0 | 5 | 0 |
| Configuration | PP-based resin | Parts by mass | 44.5 | 44.5 | 44.5 |
| | Glass fiber | | 30 | 30 | 30 |
| | Flame retardant | | 25 | 25 | 25 |
| | Dispersant | | 0.5 | 0.5 | 0.5 |
| Physical properties | Flame retardancy UL94 | - | V-0 | V-0 | V-0 |
| | Tensile strength | MPa | 55.3 | 53.2 | 54.2 |
| | Bending strength | MPa | 93.1 | 94.1 | 93.2 |

From the results in Table 3, the recycled molded articles including the pulverized samples (Experimental Examples 2-1 and 2-2) were comparable in both flame retardancy and mechanical properties to the molded article including no pulverized sample (Experimental Example 2-3).

From this, it was confirmed that even when the pulverized product obtained by recovering and pulverizing the upper case and the thermoplastic elastomer layer together was used as a raw material of the next molded article (recycled molded article), molding could be performed without any problem. Further, when the flame retardancy and mechanical properties of the manufactured recycled molded article were confirmed, it was also confirmed that the performance was not impaired.

### Second Aspect And Third Aspect

### Example 1

The material (A-1) for forming the thermoplastic elastomer layer in the shape of pellet was charged into a 3D printer (GEM550 available from S. Lab. Co., Ltd.) and ejected onto the plate (structural body) including the synthetic resin (thermoplastic resin) under the setting conditions of a layer pitch 3 mm, a nozzle size 6 mm, a nozzle temperature 195°C, a shaping speed 20 mm/s, an ejection ratio 1.0, and a table temperature 80°C, to shape a sample for measuring tensile shear adhesive strength and a sample for measuring a thermoplastic elastomer layer thickness, respectively. It is to be noted that the surface temperature of the plate (structural body) including the synthetic resin (thermoplastic resin) at this time was approximately 70°C as measured by a contact thermometer. Also, the proportion of the area of the thermoplastic elastomer layer relative to the surface area of the plate (structural body) including the synthetic resin (thermoplastic resin) in the sample for evaluating a thermoplastic elastomer layer thickness and sealing properties was approximately 18%. The adhesive strength, the thermoplastic elastomer layer thickness, and the sealing properties were each evaluated using these samples, and the results are shown in Table 4. Incidentally, in the evaluation of the adhesive strength, the peeling mode was cohesive failure of the material for forming the thermoplastic elastomer layer.

### Example 2

A sample for measuring tensile shear adhesive strength and a sample for measuring a thermoplastic elastomer layer thickness were respectively shaped in the same manner as in Example 1 except that the material for forming the thermoplastic elastomer layer was (A-2), the nozzle temperature was 220°C, and the ejection ratio was 1.04. It is to be noted that the surface temperature of the plate (structural body) including the synthetic resin (thermoplastic resin) at this time was approximately 70°C as measured by a contact thermometer. Also, the proportion of the area of the thermoplastic elastomer layer relative to the surface area of the plate (structural body) including the synthetic resin (thermoplastic resin) in the sample for evaluating a thermoplastic elastomer layer thickness and sealing properties was approximately 18%. The adhesive strength, the thermoplastic elastomer layer thickness, and the sealing properties were each evaluated using these samples, and the results are shown in Table 4. Incidentally, in the evaluation of the adhesive strength, the peeling mode was cohesive failure of the material for forming the thermoplastic elastomer layer.

### (Example 3)

A sample for measuring tensile shear adhesive strength and a sample for measuring a thermoplastic elastomer layer thickness were respectively shaped in the same manner as in Example 1 except that the material for forming the thermoplastic elastomer layer was (A-3), the nozzle temperature was 220°C, and the ejection ratio was 1.04. It is to be noted that the surface temperature of the plate (structural body) including the synthetic resin (thermoplastic resin) at this time was approximately 70°C as measured by a contact thermometer. Also, the proportion of the area of the thermoplastic elastomer layer relative to the surface area of the plate (structural body) including the synthetic resin (thermoplastic resin) in the sample for evaluating a thermoplastic elastomer layer thickness and sealing properties was approximately 18%. The adhesive strength, the thermoplastic elastomer layer thickness, and the sealing properties were each evaluated using these samples, and the results are shown in Table 4. Incidentally, in the evaluation of the adhesive strength, the peeling mode was cohesive failure of the material for forming the thermoplastic elastomer layer.

### (Example 4)

A sample for measuring tensile shear adhesive strength and a sample for measuring a thermoplastic elastomer layer thickness were respectively shaped in the same manner as in Example 1 except that the material for forming the thermoplastic elastomer layer was (A-4), the nozzle temperature was 220°C, and the ejection ratio was 1.04. It is to be noted that the surface temperature of the plate (structural body) including the synthetic resin (thermoplastic resin) at this time was approximately 70°C as measured by a contact thermometer. Also, the proportion of the area of the thermoplastic elastomer layer relative to the surface area of the plate (structural body) including the synthetic resin (thermoplastic resin) in the sample for evaluating a thermoplastic elastomer layer thickness and sealing properties was approximately 18%. The adhesive strength, the thermoplastic elastomer layer thickness, and the sealing properties were each evaluated using these samples, and the results are shown in Table 4. Incidentally, in the evaluation of the adhesive strength, the peeling mode was cohesive failure of the material for forming the thermoplastic elastomer layer.

### Comparative Example 1

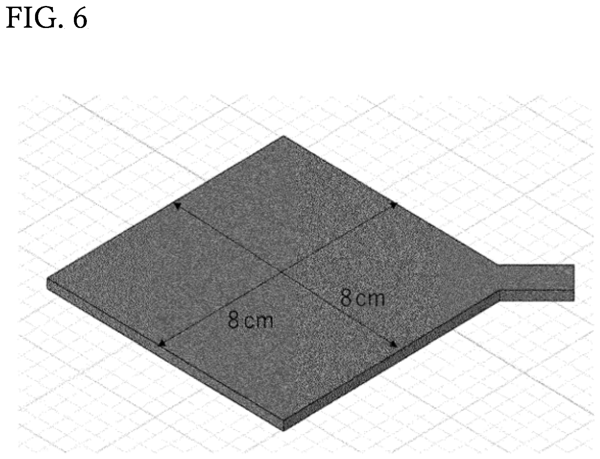

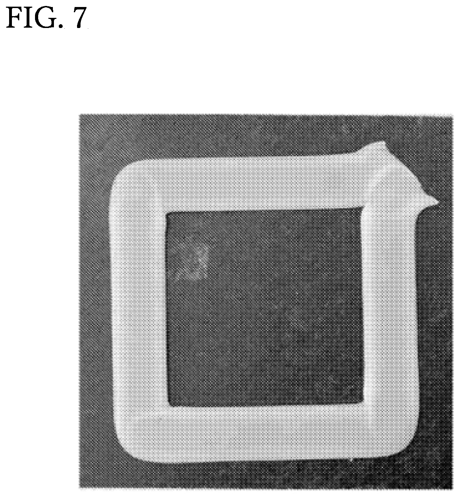

A sample for measuring a thermoplastic elastomer layer thickness was shaped in the same manner as in Example 2 except that the ejection ratio was set to 1.38 and the shape of the sample for measuring a thermoplastic elastomer layer thickness was changed to the shape having a right-angled corner as shown in FIG. 6. Using this sample, a thermoplastic elastomer layer thickness and sealing properties were each evaluated, and the results are shown in Table 4. The shaped appearance of the sample is shown in FIG. 7. In this sample, the proportion of the area of the thermoplastic elastomer layer relative to the surface area of the plate (structural body) including the synthetic resin (thermoplastic resin) was approximately 18%. In this sample, unevenness occurred in a portion where the paths overlapped at the start point and the end point of the shaping path. Further, the material forming the thermoplastic elastomer layer was partially retained at the right-angled corner portion, and the surface was uneven.

### Comparative Example 2

A silicone foam material having a thickness of 5 mm and a width of 8 mm with a double-sided tape (product number: 93010LE) available from 3M Company, attached to one surface thereof was prepared, and the double-sided tape side of the silicone foam material was attached to the plate (structural body) including the synthetic resin (thermoplastic resin) so that a contact area of the tape with the plate was approximately 125 mm², and a pressure of 2.0 MPa was applied from above the silicone foam for 24 hours. Thereafter, an upper surface of the silicone foam (the surface opposite the surface in contact with the plate (structural body) including the synthetic resin (thermoplastic resin)) was lined with an aluminum plate with a thickness of 0.8 mmt, and the adhesive strength between the silicone foam and the plate (structural body) including the synthetic resin (thermoplastic resin) was evaluated by a tensile shear test in the same manner as in Examples, and the results are shown in Table 4. Incidentally, in the evaluation of the adhesive strength, the peeling mode was interfacial peeling between the plate (structural body) and the double-sided tape.

### [Table 4]

**Table 4**

| | | Example 1 | Example 2 | Example 3 | Example 4 | Comparative Example 1 | Comparative Example 2 |
|---|---|---|---|---|---|---|---|
| Material for forming thermoplastic elastomer layer | | A-1 | A-2 | A-3 | A-4 | A-2 | Silicone foam |
| Adhesive strength | | 1.0 MPa | 0.62 MPa | 0.80 MPa | 0.56 MPa | - | 0.42MPa |
| Thermoplastic elastomer layer thickness (mm) | (a) | 3.31 | 2.82 | 3.52 | 3.26 | 2.17 | - |
| | (b) | 3.38 | 3.12 | 3.41 | 3.14 | 3.63 | - |
| | (c) | 3.36 | 2.98 | 3.50 | 3.03 | 2.17 | - |
| | (d) | 3.27 | 2.99 | 3.55 | 2.78 | 2.76 | - |
| | (e) | 3.31 | 2.94 | 3.65 | 3.19 | 2.13 | - |
| | (f) | 3.27 | 2.96 | 3.76 | 3.15 | 2.80 | - |
| | (g) | 3.35 | 2.96 | 3.59 | 3.16 | 2.23 | - |
| | (h) | 3.31 | 2.83 | 3.71 | 3.06 | 2.65 | - |
| | Difference between maximum and minimum | 0.11 | 0.30 | 0.35 | 0.48 | 1.51 | - |
| Sealing properties | | OK | OK | OK | OK | NG | - |

In each of Examples 1 to 4, the difference between the maximum thickness and the minimum thickness of the thermoplastic elastomer layer is within the range of the second aspect and the third aspect of the present invention, and thus the sealing properties are excellent, and the material for forming the thermoplastic elastomer layer is directly bonded onto the plate (structural body) by thermal fusion, and thus the adhesive strength is excellent. On the other hand, in Comparative Example 1, the difference between the maximum thickness and the minimum thickness of the thermoplastic elastomer layer is larger than the range of the second aspect and the third aspect of the present invention, and the sealing properties are therefore poor. In addition, in Comparative Example 2, the silicone foam is adhered onto the plate (structural body) via the double-sided tape, and thus the adhesive strength is poor.

In addition, in the second and third aspects, the material recyclability was evaluated. Specifically, the results are the same as those of Experimental Examples 2-1 to 2-3 of the first aspect.

In the evaluation of material recyclability in the third aspect, the plate including the synthetic resin described in the evaluation of material recyclability in the first aspect can be read as a structural body including a thermoplastic resin. That is, the synthetic resin can be read as a thermoplastic resin, and the plate can be read as a structural body.

In the second and third aspects as well, as in the first aspect, the results in Table 3 reveal that the recycled molded articles including the pulverized sample (Experimental Examples 2-1 and 2-2) were comparable to the molded article including no pulverized sample (Experimental Example 2-3) in both flame retardancy and mechanical properties.

From this, it was confirmed that even when the pulverized product obtained by also recovering and pulverizing the thermoplastic elastomer layer together was used as a raw material of the next molded article (recycled molded article), molding could be performed without any problem. Further, when the flame retardancy and mechanical properties of the manufactured recycled molded article were confirmed, it was also confirmed that the performance was not impaired.

### Industrial Applicability

The method for manufacturing the laminate of the present invention (the second aspect) and the molded body of the present invention (the third aspect) achieves high adhesive strength and excellent sealing properties, and enables material recycling. In particular, the present invention is useful for a battery pack using a resin material which has been actively studied in recent years, and is expected to contribute to sustainable society because the present invention is excellent in waterproofing and dustproofing effects due to high adhesive strength and excellent sealing properties, and is also recyclable.

### Reference Signs List

1 Electric vehicle
10 Chassis
10a Opening portion
15 Tire
20 Battery pack
21 Case
22 Upper case
23 Upper case main body
24 Upper flange
25 Flange protrusion (protrusion)
32 Upper sidewall
33 Top wall
42 Lower case
43 Lower case main body
44 Lower flange
47 Lower sidewall
48 Bottom wall
51 Power storage unit
56 Fixing portion
57 Bolt
58 Nut
61 Thermoplastic elastomer layer
O1 Axis
S1 Accommodation space

## Claims

1. A battery pack comprising:
an upper case including an upper case main body and an upper flange protruding outward from an outer peripheral edge of the upper case main body along a horizontal plane, and being formed of a material including a synthetic resin;
a lower case including a lower case main body and a lower flange protruding outward from an outer peripheral edge of the lower case main body along a horizontal plane, and being disposed to face the upper flange from below; and
a power storage unit disposed in an accommodation section formed of the upper case main body and the lower case main body,
wherein the battery pack includes, between the upper flange and the lower flange, a thermoplastic elastomer layer formed of rubber alone and/or a composition including rubber and a thermoplastic resin.

2. The battery pack according to claim 1, wherein the thermoplastic elastomer layer is formed of a material including either or both of olefinic rubber and a polyolefin-based resin.

3. The battery pack according to claim 1 or 2, wherein the synthetic resin includes a thermoplastic resin.

4. The battery pack according to claim 1 or 2, wherein the synthetic resin includes a polyolefin-based resin.

5. The battery pack according to claim 1 or 2, wherein the upper case is formed of a resin fiber composite material obtained by mixing a fiber with a synthetic resin.

6. The battery pack according to claim 5, wherein the fiber includes a glass fiber.

7. The battery pack according to claim 5, wherein the resin fiber composite material is a stampable sheet.

8. The battery pack according to claim 1 or 2, wherein the thermoplastic elastomer layer is in direct contact with at least one of the upper flange and the lower flange.

9. The battery pack according to claim 1 or 2, comprising a protrusion protruding upward from the upper flange.

10. A method for manufacturing the battery pack described in claim 1 or 2, wherein the thermoplastic elastomer layer is thermally fused with at least one of the upper flange and the lower flange.

11. A method for manufacturing the battery pack described in claim 1 or 2, wherein the thermoplastic elastomer layer is molded by a three dimensional additive manufacturing method.

12. A method for manufacturing a recycled molded article, comprising:
a recovery step of recovering an upper case and a thermoplastic elastomer layer from the battery pack described in claim 1 or 2;
a pulverization step of pulverizing a recovered material recovered in the recovery step; and
a manufacturing step of manufacturing a recycled molded article including a pulverized product pulverized in the pulverization step as a raw material.
